# EUROPEAN PATENT SPECIFICATION

(11) **EP 2 420 764 B1**
(45) Date of publication and mention of the grant of the patent: **12.02.2020**
(21) Application number: 09843336.0
(22) Date of filing: 17.04.2009
(51) Int. Cl.: F25B 25/00, F25B 41/04, F16K 27/00, F25B 41/00, F25B 13/00

(54) **AIR-CONDITIONING DEVICE**
LUFTKLIMATISIERUNGSVORRICHTUNG
DISPOSITIF DE CLIMATISATION

(43) Date of publication of application: 22.02.2012
(73) Proprietor: Mitsubishi Electric Corporation, Tokyo 100-8310 (JP)
(72) Inventor: MORIMOTO, Hiroyuki, Tokyo 100-8310 (JP); YAMASHITA, Koji, Tokyo 100-8310 (JP); HAYASHIDA, Katsuhiko, Tokyo 100-8310 (JP); NAKAO, Hiroto, Tokyo 100-8310 (JP); MOTOMURA, Yuji, Tokyo 100-8310 (JP); WAKAMOTO, Shinichi, Tokyo 100-8310 (JP)
(74) Representative: Pfenning, Meinig & Partner mbB
(86) International application number: PCT/JP2009/057730
(87) International publication number: WO 2010/119555

(56) References cited:
- EP-A1- 1 371 911
- JP-A- 5 280 818
- JP-A- 2003 343 936
- JP-A- 2004 053 069
- JP-A- 2005 300 007
- JP-U- H0 475 278
- JP-U- H0 519 757
- US-A- 4 757 943
- US-A1- 2006 283 509
- US-B1- 6 170 270
- BEERCHECK R C: "HYDRAULIC MANIFOLDS", MACHINE DESIGN, PENTON MEDIA, CLEVELAND, OH, US, vol. 53, no. 9, 1 April 1981 (1981-04-01), pages 73-76, XP002027359, ISSN: 0024-9114

## Description

### Technical Field

The present invention relates to an air conditioning apparatus. The present invention particularly relates to simplification of a pipeline structure, size reduction of equipment, improvement of serviceability, and the like in a relay unit.

### Background Art

Hitherto, a multiple air conditioning apparatus for a building to which an air conditioning apparatus that performs a cooling operation or a heating operation by circulating a refrigerant between an outdoor unit, which is a heat source machine arranged outside a room, and an indoor unit arranged inside the room so as to convey cold or heat to a region to be air-conditioned such as indoors and the like is applied has been present (See Patent Literature 1, for example). As the refrigerant used in such an air conditioning apparatus, HFC refrigerants, for example, are widely used. Also, a natural refrigerant such as carbon dioxide (CO₂) and the like has begun to be used.

Also, an air conditioning apparatus of another configuration represented by a chiller system is used. In this air conditioning apparatus, cold or heat is generated in a heat source machine arranged outside the room, the cold or heat is transferred to a heat medium such as water, an anti-freezing fluid and the like by a heat exchanger arranged in the outdoor unit, and the heat medium is conveyed to a fan coil unit, a panel heater and the like, which is an indoor unit arranged in a region to be air-conditioned, so as to perform the cooling operation or heating operation (See Patent Literature 2, for example). Moreover, there is known a waste heat recovery type chiller in which four water pipelines are connected to a heat source machine so as to supply cold or heat.

In US 4,757,943, a liquid temperature controlling method and apparatus are provided in which on/off valves are utilized. The on/off valves are housed in a compact manifold assembly having a number of channels through which hot and cold water flows to and from the valves. Each of the valves communicates with an orifice, with each orifice communicating with the hot water valves being of a different size to produce binary flow patterns of water exiting the hot water associated orifices and valves. Similarly, each of the orifices communicating with a cold water valve is of a different size so that the flow rate of water from each cold water associated orifice is related in a binary manner to the flow rates through the other cold water associated orifices and valves. Because of the greater viscosity of the hot water, it is preferable that the hot water associated orifices be of a smaller size than corresponding cold water orifices. The opening/closing of the valves is controlled using information stored in memory. The programmed information correlates valve openings with information relating to water temperature. When there is a difference between actual and desired temperatures, one or more different combinations of valves can be opened in a predetermined manner without cycling through all possible valve combinations defined between the current combination of valve openings and the next combination of valve openings whereby the difference between the actual and desired temperatures is rapidly reduced.

In Beercheck (Beercheck, R. C., "Hydraulic manifolds", Machine Design, Penton Media, Cleveland, Ohio, USA, Vol. 53, No. 9, 1981, pages 73-76), hydraulic manifolds are described as well as some guidelines on how big to make a manifold. According to Beercheck, there are three different types of manifolds: gasket-mounted, stacked, and integrated circuit.

### Citation List

### Patent Literature

PTL 1: Japanese Unexamined Patent Application Publication No. 2-118372 (page 3, Fig. 1)
PTL 2: Japanese Unexamined Patent Application Publication No. 2003-343936 (page 5, Fig. 1)

### Summary of Invention

### Technical Problem

With a prior-art air conditioning apparatus, since a high-pressure refrigerant is conveyed to an indoor unit, a refrigerant charged amount becomes extremely large, and if the refrigerant leaks from a refrigerant circuit, harmful effects to the global environment such as deterioration of global warming may occur. Particularly, R410A has as large global warming potential of 1970, and if such a refrigerant is to be used, reduction of the refrigerant charged amount becomes extremely important from the viewpoint of global environmental protection. Also, if the refrigerant leaks into a living space, chemical properties of the refrigerant might affect the human body. Thus, measures such as more ventilation than necessary, installation of a leakage sensor, and the like are required, which lead to increases in costs and power consumption.

Such a problem can be solved by the chiller system as described in Patent Literature 2. However, since heat is exchanged performed between the refrigerant and water in the outdoor unit and the water is conveyed to the indoor unit, water conveying power becomes extremely large, and energy consumption is increased. Also, if both cold and heat are to be supplied by water or the like, the number of connected pipelines needs to be increased, which results in an increase in labor, time and costs required for installation work. Thus, to simplify the pipeline construction on the site, if a connection pipeline, valves, and a heat exchanger are contained on the device side in advance, the devices contained in the pipeline or valves become extremely large, which results in a cost increase and lowered productivity.

Thus, there is known a device in which a relay unit that exchanges heat between the refrigerant and water and the like is provided between the outdoor unit and the indoor unit so that the water conveying power does not become large. Here, the relay unit does not directly act on air conditioning of a target space, and in view of leakage of the refrigerant and the like, it is expected that the relay unit is connected by a pipeline to an indoor unit on each floor and installed in a space with many restrictions such as in the attic. Therefore, the pipeline structure is preferably simplified and made small. Particularly in the size reduction, making a thinner structure is preferable so that the relay unit can cope with an environment with harsh restrictions in one direction such as the height direction. However, the relay unit might handle cooling and heating energy at the same time, and if a pipeline handling the cooling energy is located close to the pipeline handling the heating energy through mere size-reduction, energy efficiency is deteriorated, and thus, measures are needed. Also, considering installation in a restricted space, consideration should be given so that maintenance and the like can be performed easily, for example.

The present invention was made in order to solve the above problems and an object thereof is to provide an air conditioning apparatus and the like which can be made thinner and allow for easy maintenance and time reduction while saving energy.

### Solution to Problem

An air-conditioner comprising a relay unit according to the present invention is connected to one or a plurality of outdoor units and a plurality of indoor units by different pipeline systems, respectively, so as to exchange heat between a refrigerant circulating through the outdoor unit and a heat medium different from the refrigerant and to circulate the heat medium through the indoor unit, provided with a valve block unit to which a plurality of valve blocks integrated with at least a plurality of branch pipes connected to the indoor unit, a plurality of main pipes which become channels for the heat medium relating to the heat exchange, and a heat medium flow direction switching device that switches the main pipes to communicate with the branch pipe are connected, wherein a slit is formed in the valve block unit between the main pipe on the cooling side and the main pipe on the heating side.

### Advantageous Effects of Invention

In the air-conditioner according to the present invention, since the valve block unit to which the plurality of valve blocks integrated with the plurality of branch pipes, the plurality of main pipes, and the heat medium flow direction switching device are connected, the pipeline can be simplified, the relay unit can be made thinner, and installation can be made effectively even in an environment with harsh restrictions such as in the attic.

### Brief Description of Drawings

[Fig. 1] Fig. 1 is an outline circuit diagram illustrating a configuration of an air conditioning apparatus on which a valve block unit according to Embodiment 1 is mounted.
[Fig. 2] Fig. 2 is a refrigerant circuit diagram illustrating a flow of a refrigerant in a cooling-main operation mode of the air conditioning apparatus.
[Fig. 3] Fig. 3 is a refrigerant circuit diagram illustrating an outline configuration of the valve block unit in the air conditioning apparatus.
[Fig. 4] Fig. 4 is a perspective view illustrating the structure of the valve block unit in detail.
[Fig. 4a] Fig. 4a is an exploded perspective view illustrating a state in which the valve block unit is exploded.
[Fig. 4b] Fig. 4b is a view of the valve block unit when seen from a side face.
[Fig. 5] Fig. 5 is a longitudinal sectional view illustrating a sectional configuration of a valve block in a simplified manner.
[Fig. 6] Fig. 6 is an explanatory diagram for explaining a valve body.
[Fig. 7] Fig. 7 is an explanatory diagram for explaining a valve body.
[Fig. 8] Fig. 8 is an outline diagram illustrating a rotating state of the valve body.
[Fig. 9] Fig. 9 is an explanatory diagram for explaining connection of the valve block.
[Fig. 10] Fig. 10 is an explanatory diagram for explaining connection of the valve block.
[Fig. 11a] Fig. 11a is a graph illustrating an example of a relationship between a pipeline distance and a temperature rise.
[Fig. 11b] Fig. 11b is a graph illustrating an example of the relationship between the pipeline distance and the temperature rise.
[Fig. 11c] Fig. 11c is a graph illustrating an example of the relationship between the pipeline distance and the temperature rise.
[Fig. 12] Fig. 12 is a diagram according to the invention for suppressing thermal interference.
[Fig. 13] Fig. 13 is a view illustrating an appearance of a relay unit 3 according to according to a preferred embodiment of the claimed invention.
[Fig. 14] Fig. 14 is a view illustrating the connection of a valve block unit 300.
[Fig. 15] Fig. 15 is a diagram illustrating an outline of a structure of a housing 600 that contains the relay unit 3.
[Fig. 16] Fig. 16 is a diagram illustrating a relationship between the valve block unit 300 and a heat medium heat exchanger 15.
[Fig. 17] Fig. 17 is a diagram illustrating another example of an installed form of the relay unit 3.
[Fig. 18] Fig. 18 is a longitudinal sectional view illustrating a sectional configuration of the valve block constituting the valve block unit according to example 4, not part of the claimed invention, in a simplified manner.
[Fig. 19] Fig. 19 is an explanatory diagram for explaining the valve body.
[Fig. 20] Fig. 20 is a perspective view illustrating the structure of the valve block unit in detail.
[Fig. 21] Fig. 21 is an explanatory diagram for explaining the connection of the valve block.
[Fig. 22] Fig. 22 is an explanatory diagram for explaining the connection of the valve block.

### Description of Embodiments

Embodiments of the present invention will be described below.

### Embodiment 1.

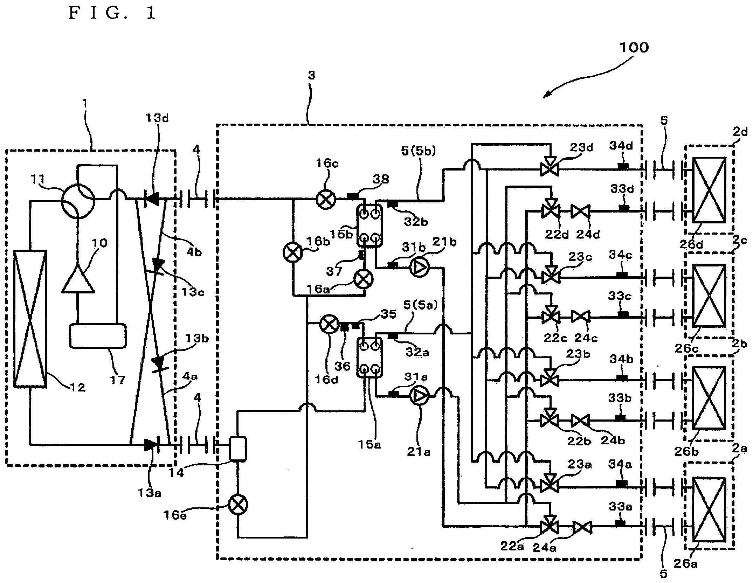

Fig. 1 is an outline circuit diagram illustrating a configuration of an air conditioning apparatus 100 on which a valve block unit 300 according to Embodiment 1 of the present invention is mounted. On the basis of Fig. 1, a detailed configuration of the air conditioning apparatus 100 will be described. As shown in Fig. 1, an outdoor unit 1 and a relay unit 3 are connected through a first heat medium heat exchanger 15a and a second heat medium heat exchanger 15b and the relay unit 3 and an indoor unit 2 are connected through the first heat medium heat exchanger 15a and the second heat medium heat exchanger 15b . Configurations and functions of each constituent device disposed in the air conditioning apparatus 100 will be described below.

### [Outdoor unit 1]

In the outdoor unit 1, a compressor 10, a four-way valve 11, which is a refrigerant flow direction switching device, a heat-source side heat exchanger 12, and an accumulator 17 are connected and contained in series by a refrigerant pipeline 4. Also, in the outdoor unit 1, a first connection pipeline 4a, a second connection pipeline 4b, a check valve 13a, a check valve 13b, a check valve 13c, and a check valve 13d are disposed. By disposing the first connection pipeline 4a, the second connection pipeline 4b, the check valve 13a, the check valve 13b, the check valve 13c, and the check valve 13d, the flow direction of the heat-source-side refrigerant made to flow into the relay unit 3 can be made constant regardless of an operation required by the indoor unit 2.

The compressor 10 is to suck in the heat-source-side refrigerant and to compress the heat-source-side refrigerant to bring it into a high-temperature high-pressure state and is preferably composed of an inverter compressor or the like capable of capacity control, for example. The four-way valve 11 is to perform switching between the flow of the heat-source-side refrigerant during a heating operation and the flow of the heat-source-side refrigerant during the cooling operation. The heat-source-side heat exchanger 12 functions as an evaporator during the heating operation, while it functions as a condenser during the cooling operation so as to exchange heat between the air supplied from a blower such as a fan, not shown, and the heat-source-side refrigerant and to evaporate and gasify the heat-source-side refrigerant or to condense and liquefy the same. The accumulator 17 is disposed in the suction side of the compressor 10 and stores an excess refrigerant.

The check valve 13d is disposed in the refrigerant pipeline 4 between the relay unit 3 and the four-way valve 11 so as to allow the flow of the heat-source-side refrigerant only in a predetermined direction (direction from the relay unit 3 to the outdoor unit 1). The check valve 13a is disposed in the refrigerant pipeline 4 between the heat-source side heat exchanger 12 and the relay unit 3 so as to allow the flow of the heat-source-side refrigerant only in a predetermined direction (direction from the outdoor unit 1 to the relay unit 3). The check valve 13b is disposed in the first connection pipeline 4a so as to allow the flow of the heat-source-side refrigerant only in the direction from the downstream side of the check valve 13d to the downstream side of the check valve 13a. The check valve 13c is disposed in the second connection pipeline 4b so as to allow the flow of the heat-source-side refrigerant only in the direction from the upstream side of the check valve 13d to the upstream side of the check valve 13a.

The first connection pipeline 4a connects the refrigerant pipeline 4 on the downstream side of the check valve 13d and the refrigerant pipeline 4 on the downstream side of the check valve 13a to each other in the outdoor unit 1. The second connection pipeline 4b connects the refrigerant pipeline 4 on the upstream side of the check valve 13d and the refrigerant pipeline 4 on the upstream side of the check valve 13a to each other in the outdoor unit 1. In Fig. 1, the example in which the first connection pipeline 4a, the second connection pipeline 4b, the check valve 13a, the check valve 13b, the check valve 13c, and the check valve 13d are disposed is shown, but that example is not limiting, and they do not necessarily have to be disposed.

### [Indoor unit 2]

On the indoor units 2, use-side heat exchangers 26 are mounted, respectively. This use-side heat exchanger 26 is connected to a heat medium flow control device 24 and a heat medium flow direction switching device 23 of the relay unit 3 through the pipeline 5. This use-side heat exchanger 26 exchanges heat between the air supplied from the blower such as a fan, not shown, and a heat medium and generates air for heating or air for cooling to be supplied to a region to be air-conditioned.

In Fig. 1, the example in which four indoor units 2 are connected to the relay unit 3 is shown, in which an indoor unit 2a, an indoor unit 2b, an indoor unit 2c, and an indoor unit 2d from the lower side in the figure are shown. Corresponding to the indoor units 2a to 2d, the use-side heat exchanger 26 is also shown from the lower side in the figure as a use-side heat exchanger 26a, a use-side heat exchanger 26b, a use-side heat exchanger 26c, and a use-side heat exchanger 26d. The number of connected indoor units 2 is not limited to four units shown in Fig. 1.

### [Relay unit 3]

The relay unit 3 is composed of a gas-liquid separator 14, a expansion device 16e, two heat medium heat exchangers 15 (the first heat medium heat exchanger 15a and the second heat medium heat exchanger 15b), four expansion devices 16, two heat medium delivery devices 21, four heat medium flow direction switching devices 22, four heat medium flow direction switching devices 23, and four heat medium flow control devices 24 are disposed.

The gas-liquid separator 14 is connected to the single refrigerant pipeline 4 connected to the outdoor unit 1 and the two refrigerant pipelines 4 connected to the first heat medium heat exchanger 15a and the second heat medium heat exchanger 15b so as to separate the heat-source-side refrigerant supplied from the outdoor unit 1 to a vapor-state refrigerant and a liquid refrigerant. The expansion device 16e is disposed between the refrigerant pipeline 4 that connects the expansion device 16a and the expansion device 16b to each other and the gas-liquid separator 14 and functions as a decompression valve or an expansion device so as to decompress and expand the heat-source-side refrigerant. The expansion device 16e is preferably composed of a valve with variably controllable opening degree such as an electronic expansion valve, for example.

The two heat medium heat exchangers 15 (the first heat medium heat exchanger 15a and the second heat medium heat exchanger 15b) function as condensers or evaporators, exchange heat between the heat-source-side refrigerant and the heat medium and supply cold or heat generated in the outdoor unit 1 to the indoor units 2. In the flow of the heat-source-side refrigerant, the first heat medium heat exchanger 15a is disposed between the gas-liquid separator 14 and the expansion device 16d. In the flow of the heat-source-side refrigerant, the second heat medium heat exchanger 15b is disposed between the expansion device 16a and the expansion device 16c.

The four expansion devices 16 (the expansion devices 16a to 16d) function as decompression valves or expansion valves and decompress and expand the heat-source-side refrigerant. The expansion device 16a is disposed between the expansion device 16e and the second heat medium heat exchanger 15b. The expansion device 16b is disposed in parallel with the expansion device 16a. The expansion device 16c is disposed between the second heat exchanger 15b and the outdoor unit 1. The expansion device 16d is disposed between the first heat exchanger 15a and the expansion device 16a as well as the expansion device 16b. The four expansion devices 16 are preferably composed of devices with variably controllable opening degree such as electronic expansion valve, for example.

The two heat medium delivery devices 21 (the first heat medium delivery device 21a and the second heat medium delivery device 21b) are composed of pumps and the like and pressurize and circulate the heat medium guided through the pipeline 5. The first heat medium delivery device 21a is disposed in the pipeline 5 between the first heat medium heat exchanger 15a and the heat medium flow direction switching device 22. The second heat medium delivery device 21b is disposed in the pipeline 5 between the second heat medium heat exchanger 15b and the heat medium flow direction switching device 22. The types of the first heat medium delivery device 21a and the second heat medium delivery device 21b are not particularly limited but may be configured by a capacity-controllable pump or the like.

The four heat medium flow direction switching devices 22 (the heat medium flow direction switching devices 22a to 22d) are composed of three-way valves and switch the channels of the heat medium. The heat medium flow direction switching devices 22 are disposed in the number (four, here) according to the number of the installed indoor units 2. As for the heat medium flow direction switching devices 22, one of the three ways is connected to the first heat medium heat exchanger 15a, another one of the three ways to the second heat medium heat exchanger 15, and the rest of the three ways to the heat medium flow control device 24, respectively, and they are disposed on the inlet side of a heat medium channel of the use-side heat exchanger 26. Corresponding to the indoor units 2, they are shown as the heat medium flow direction switching device 22a, the heat medium flow direction switching device 22b, the heat medium flow direction switching device 22c, and the heat medium flow direction switching device 22d from the lower side in the figure.

The four heat medium flow direction switching devices 23 (the heat medium flow direction switching devices 23a to 23d) are composed of three-way valves and switch the channels of the heat medium. The heat medium flow direction switching devices 23 are disposed in the number (four, here) according to the number of the installed indoor units 2. As for the heat medium flow direction switching devices 23, one of the three ways is connected to the first heat medium heat exchanger 15a, another one of the three ways to the second heat medium heat exchanger 15b, and the rest of the three ways to the use-side heat exchanger 26, respectively, and they are disposed on the outlet side of a heat medium channel of the use-side heat exchanger 26. Corresponding to the indoor units 2, they are shown as the heat medium flow direction switching valve 23a, the c heat medium flow direction switching valve 23b, the heat medium flow direction switching valve 23c, and the heat medium flow direction switching valve 23d from the lower side in the figure.

The four heat medium flow control devices 24 (the heat medium flow control devices 24a to 24d) are composed of two-way valves and switch the channel of the heat medium. The heat medium flow control devices 24 are disposed in the number (four, here) according to the number of the installed indoor units 2. One side of each of the heat medium flow control devices 24 is connected to the use-side heat exchanger 26, while the other side is connected to the heat medium flow direction switching device 22, and they are disposed on the inlet side of the heat medium channel of the use-side heat exchanger 26. Corresponding to the indoor units 2, they are shown as the heat medium flow control device 24a, the heat medium flow control device 24b, the heat medium flow control device 24c, and the heat medium flow control device 24d from the lower side in the figure.

Also, in the relay unit 3, two first heat medium temperature detecting means 31, two second heat medium temperature detecting means 32, four third heat medium temperature detecting means 33, four fourth heat medium temperature detecting means 34, a first refrigerant temperature detecting means 35, a refrigerant pressure detecting means 36, a second refrigerant temperature detecting means 37, and a third refrigerant temperature detecting means 38 are disposed. Information detected by these detecting means is sent to a controller, not shown, that controls the operation of the air conditioning apparatus 100 and used for control of driving frequencies of the compressor 10 and the heat medium delivery device 21, switching of the channel for the heat medium flowing through the pipeline 5 and the like.

The two first heat medium temperature detecting means 31 (a first heat medium temperature detecting means 31a and a first heat medium temperature detecting means 31b) detect the temperature of the heat medium flowing out of the heat medium heat exchanger 15, that is, the heat medium temperature at the outlet of the heat medium heat exchanger 15 and are preferably composed of thermistors or the like. The first heat medium temperature detecting means 31a is disposed in the pipeline 5 on the inlet side of the first heat medium delivery device 21a. The second heat medium temperature detecting means 31b is disposed in the pipeline 5 on the inlet side of the second heat medium delivery device 21b.

The two second heat medium temperature detecting means 32 (a second heat medium temperature detecting means 32a and a second heat medium temperature detecting means 32b) detect the temperature of the heat medium flowing into the heat medium heat exchanger 15, that is, the heat medium temperature at the inlet of the heat medium heat exchanger 15 and are preferably composed of thermistors or the like. The second heat medium temperature detecting means 32a is disposed in the pipeline 5 on the inlet side of the first heat medium heat exchanger 15a. The second heat medium temperature detecting means 32b is disposed in the pipeline 5 on the inlet side of the second heat medium heat exchanger 15b.

The four third heat medium temperature detecting means 33 (third heat medium temperature detecting means 33a to 33d) are disposed on the inlet side of the heat medium channel of the use-side heat exchanger 26 and detect the temperature of the heat medium flowing into the use-side heat exchanger 26, and the detecting means is preferably composed of a thermistor or the like. The third heat medium temperature detecting means 33 are disposed in number (four, here) according to the installed number of the indoor units 2. Corresponding to the indoor units 2, they are shown as the third heat medium temperature detecting means 33a, the third heat medium temperature detecting means 33b, the third heat medium temperature detecting means 33c, and the third heat medium temperature detecting means 33d from the lower side in the figure.

The four fourth heat medium temperature detecting means 34 (fourth heat medium temperature detecting means 34a to 34d) are disposed on the outlet side of the heat medium channel of the use-side heat exchanger 26 and detect the temperature of the heat medium flowing out of the use-side heat exchanger 26, and the detecting means is preferably composed of a thermistor or the like. The fourth heat medium temperature detecting means 34 are disposed in number (four, here) according to the installed number of the indoor units 2. Corresponding to the indoor units 2, they are shown as the fourth heat medium temperature detecting means 34a, the fourth heat medium temperature detecting means 34b, the fourth heat medium temperature detecting means 34c, and the fourth heat medium temperature detecting means 34d from the lower side in the figure.

The first refrigerant temperature detecting means 35 is disposed at the outlet side of the heat-source-side refrigerant channel of the first heat medium heat exchanger 15a and detects the temperature of the heat-source-side refrigerant flowing out of the first heat medium heat exchanger 15a, and the detecting means is preferably composed of a thermistor or the like. The refrigerant pressure detecting means 36 is disposed on the outlet side of the heat-source-side refrigerant channel of the first heat medium heat exchanger 15a and detects a pressure of the heat-source-side refrigerant flowing out of the first heat medium heat exchanger 15a and can be constituted by a pressure sensor or the like.

The second refrigerant temperature detecting means 37 is disposed on the inlet side of the heat-source-side refrigerant channel of the second heat medium heat exchanger 15b and detects the temperature of the heat-source-side refrigerant flowing into the second heat medium heat exchanger 15b, and the detecting means is preferably composed of a thermistor or the like. The third refrigerant temperature detecting means 38 is disposed on the outlet side of the heat-source-side refrigerant channel of the second heat medium heat exchanger 15b and detects a temperature of the heat-source-side refrigerant flowing out of the second heat medium heat exchanger 15b, and the detecting means is preferably composed of a thermistor or the like.

The pipeline 5 through which the heat medium is guided is composed of a pipeline connected to the first heat medium heat exchanger 15a (hereinafter referred to as a pipeline 5a) and a pipeline connected to the second heat medium heat exchanger 15b (hereinafter referred to as a pipeline 5b). The pipeline 5a and the pipeline 5b are branched in accordance with the number (here, branched to four each) of the indoor units 2 connected to the relay unit 3. And the pipeline 5a and the pipeline 5b are connected by the heat medium flow direction switching device 22 and the heat medium flow direction switching device 23. By controlling the heat medium flow direction switching device 22 and the heat medium flow direction switching device 23, it is determined whether the heat medium guided through the pipeline 5a is made to flow into the use-side heat exchanger 26 or the heat medium guided through the pipeline 5b is made to flow into the use-side heat exchanger 26.

In this air conditioning apparatus 100, the compressor 10, the four-way valve 11, the heat-source side heat exchanger 12, the first heat medium heat exchanger 15a, and the second heat medium heat exchanger 15b are connected by the refrigerant pipeline 4 in series in the order so as to constitute a refrigeration cycle. Also, the first heat medium heat exchanger 15a, the first heat medium delivery device 21a, and the use-side heat exchanger 26 are connected by the pipeline 5a in series in the order so as to constitute a heat medium circulation circuit. Similarly, the second heat medium heat exchanger 15b, the second heat medium delivery device 21b, and the use-side heat exchanger 26 are connected by the pipeline 5b in series in the order so as to constitute a heat medium circulation circuit. That is, a plurality of use-side heat exchangers 26 are connected in parallel with each of the heat medium heat exchangers 15 so as to form plural systems of the heat medium circulation circuits.

That is, the outdoor unit 1 and the relay unit 3 are connected to each other through the first heat medium heat exchanger 15a and the second heat medium heat exchanger 15b disposed in the relay unit 3. And the relay unit 3 and the indoor units 2 are connected by the first heat medium heat exchanger 15a and the second heat medium heat exchanger 15b so that the heat-source-side refrigerant, which is the primary-side refrigerant which circulates through the refrigeration cycle in the first heat medium heat exchanger 15a and the second heat medium heat exchanger 15b, exchange heat with the heat medium, which is the secondary-side refrigerant which circulates through the heat medium circulation circuit.

Here, the type of the refrigerant used in the refrigeration cycle and the heat medium circulation circuit will be described.

For the refrigeration cycle, a nonazeotropic refrigerant mixture such as R407C, a near-azeotropic refrigerant mixture such as R410A, a single refrigerant such as R22 and the like can be used. Also, a natural refrigerant such as carbon dioxide, hydrocarbon and the like may be used. By using the natural refrigerant as the heat-source-side refrigerant, an advantage that a global warming effect caused by leakage of the refrigerant can be suppressed is obtained.

The heat medium-circulation circuit is connected to the use-side heat exchanger 26 of the indoor unit 2 as described above. Thus, in the air conditioning apparatus 100, considering the case of leakage of the heat medium into a room where the indoor unit 2 is installed or the like, use of the heat medium with high safety is premised. Therefore, for the heat medium, water, an anti-freezing solution, a mixed liquid of water and the anti-freezing solution and the like can be used, for example. According to this configuration, refrigerant leakage caused by freezing or corrosion can be prevented even at a low outside temperature, and high reliability can be obtained. Also, if the indoor unit 2 is installed in a place where moisture should be avoided such as a computer room, a fluorine inactive liquid with high heat insulation can be used as the heat medium.

This air conditioning apparatus 100 is, on the basis of an instruction from each indoor unit 2, capable of the cooling operation or the heating operation with the indoor unit 2 thereof. That is, the air conditioning apparatus 100 is capable of performing the same operation with all the indoor units 2 or of performing different operations with each of the indoor units 2. There are four operation modes executed by the air conditioning apparatus 100 include a cooling-only operation mode in which all the driving indoor units 2 perform the cooling operation, a heating-only operation mode in which all the driving indoor units 2 perform the heating operation, a cooling-main operation mode in which a cooling load is larger, and a heating-main operation mode in which a heating load is larger. In each of the operation modes, the cooling-main operation mode in which the cooling and the heating are mixed and the cooling load shares the most will be described.

### [Cooling-main operation mode]

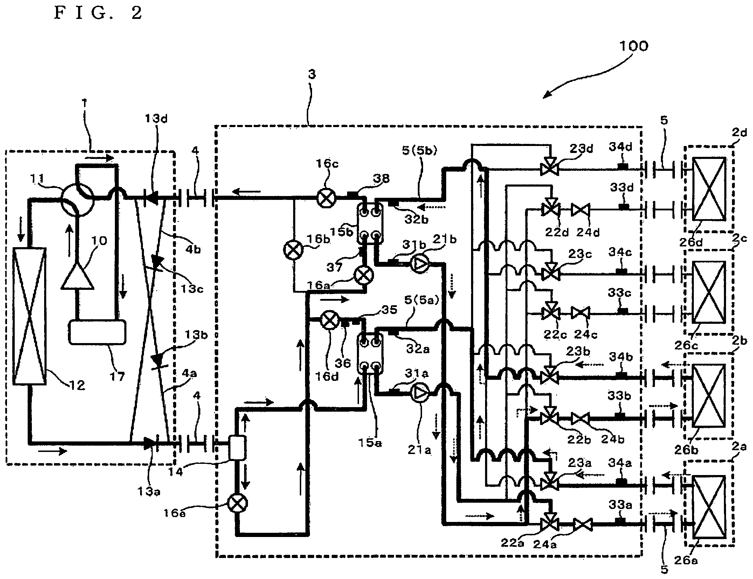

Fig. 2 is a refrigerant circuit diagram illustrating the flow of the refrigerant during the cooling-main operation mode of the air conditioning apparatus 100. In Fig. 2, using an example in which a heating load is generated in the use-side heat exchanger 26a and a cooling load is generated in the use-side heat exchangers 26b, the cooling-main operation mode will be described. In Fig. 2, the pipeline expressed by a bold line indicates a pipeline through which the refrigerant (heat-source-side refrigerant and heat medium) circulates. Also, the flow direction of the heat-source-side refrigerant is indicated by a solid-line arrow, while the flow direction of the heat medium by a broken-line arrow.

First, the flow of the heat-source-side refrigerant in the refrigeration cycle will be described.

The low-temperature and low-pressure refrigerant is compressed by the compressor 10 and discharged as a high-temperature high-pressure gas refrigerant. The high-temperature high-pressure gas refrigerant discharged from the compressor 10 passes through the four-way valve 11 and flows into the heat-source side heat exchanger 12. Then, the refrigerant is condensed while radiating heat to the outdoor air in the heat-source side heat exchanger 12 and becomes a gas-liquid two-phase refrigerant. The gas-liquid two-phase refrigerant having flowed out of the heat-source side heat exchanger 12 flows out of the outdoor unit 1 via the check valve 13a and flows into the relay unit 3 via the refrigerant pipeline 4. The gas-liquid two-phase refrigerant having flowed into the relay unit 3 flows into the gas-liquid separator 14 and is separated to a gas refrigerant and a liquid refrigerant.

The gas refrigerant having been separated in the gas-liquid separator 14 flows into the first heat medium heat exchanger 15a. The gas refrigerant having flowed into the first heat medium heat exchanger 15a is condensed and liquefied while radiating heat to the heat medium circulating through the heat medium circulation circuit and becomes a liquid refrigerant. The liquid refrigerant having flowed out of the first heat medium heat exchanger 15a passes through the expansion device 16d. On the other hand, the liquid refrigerant separated in the gas-liquid separator 14 passes through the expansion device 16e, is condensed and liquefied in the first heat medium heat exchanger 15a but merges with the liquid refrigerant having passed through the expansion device 16d, is throttled by the expansion device 16a and expanded and flows into the second heat medium heat exchanger 15b as the low-temperature and low-pressure gas-liquid two-phase refrigerant.

This gas-liquid two-phase refrigerant absorbs heat from the heat medium circulating through the heat medium circulation circuit in the second heat medium heat exchanger 15b working as an evaporator so as to cool the heat medium and becomes a low-temperature and low-pressure gas refrigerant. The gas refrigerant having flowed out of the second heat medium heat exchanger 15b passes through the expansion device 16c and then, flows out of the relay unit 3 and flows into the outdoor unit 1 via the refrigerant pipeline 4. The refrigerant having flowed into the outdoor unit 1 passes through the check valve 13d and is sucked into the compressor 10 again via the four-way valve 11 and the accumulator 17. The expansion device 16b has a small opening degree so that the refrigerant does not flow therethrough, and the expansion device 16c is in the full open state so that a pressure loss does not occur.

Subsequently, the flow of the heat medium in the heat medium circulation circuit will be described.

The heat medium having been pressurized by the first heat medium delivery device 21a and flowed out passes through the heat medium flow control device 24a via the heat medium flow direction switching device 22a and flows into the use-side heat exchanger 26a. Then, in the use-side heat exchanger 26a, the heat medium gives heat to the indoor air and performs heating of the region to be air-conditioned such as the inside of the room where the indoor unit 2 is installed. Also, the heat medium having been pressurized by the second heat medium delivery device 21b and flowed out passes through the heat medium flow control device 24b via the heat medium flow direction switching device 22b and flows into the use-side heat exchanger. Then, in the use-side heat exchanger 26b, the heat medium absorbs heat from the indoor air and performs cooling of the region to be air-conditioned such as the inside of the room where the indoor unit 2 is installed.

The heat medium used for the heating operation flows into the use-side heat exchanger 26a only in a flow rate required to cover the air-conditioning load required in the region to be air-conditioned by means of an action of the heat medium flow control device 24a. Then, the heat medium having performed the heating operation flows into the first heat medium heat exchanger 15a via the heat medium flow direction switching device 23a and is sucked into the first heat medium delivery device 21a again.

The heat medium used for the cooling operation flows into the use-side heat exchanger only in a flow rate required to cover the air-conditioning load required in the region to be air-conditioned by means of an action of the heat medium flow control device. Then, the heat medium having performed the cooling operation flows into the second heat medium heat exchanger 15b via the heat medium flow direction switching device 23b and is sucked into the second heat medium delivery device 21b again.

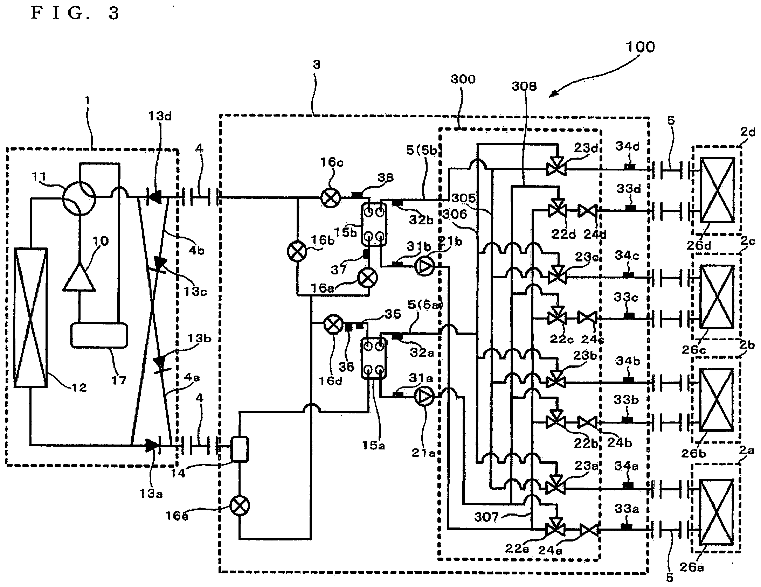

Fig. 3 is a refrigerant circuit diagram illustrating an outline configuration of a valve block unit 300 in the air conditioning apparatus 100 according to the invention. On the basis of Fig. 3, the configuration of the valve block unit 300 will be described. In Embodiment 1, a portion surrounded by a broken line in Fig. 3 is made into a block and constituted as the valve block unit 300. As is known from Fig. 3, the valve block unit 300 is composed of the heat medium flow direction switching device 22, the heat medium flow direction switching device 23, the heat medium flow control device 24, a cooling outward-flow main pipe 307, a heating outward-flow main pipe 308, a cooling return-flow main pipe 305, a heating return-flow main pipe 306, a first branch pipe 301, and a second branch pipe 302.

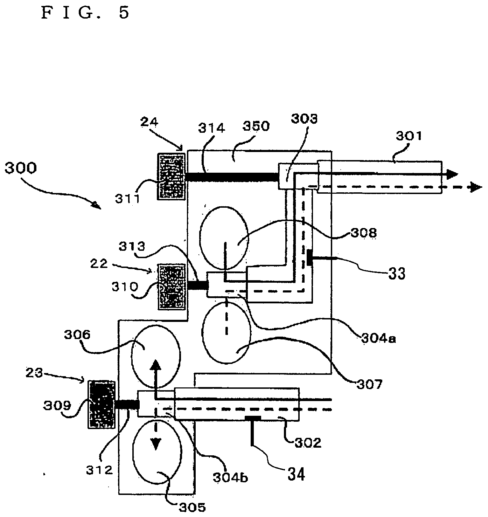

Each of the cooling outward-flow main pipe 307, the heating outward-flow main pipe 308, the cooling return-flow main pipe 305, the heating return-flow main pipe 306, the first branch pipe 301, and the second branch pipe 302 constitutes a part of the above-described pipeline 5. Also, the first branch pipe 301 constitutes a channel that guides the heat medium to the load side (indoor unit 2), and the second branch pipe 302 constitutes a channel through which the heat medium returns from the load side (indoor unit). The first branch pipe 301 and the second branch pipe 302 will be described in detail in Fig. 5.

The heat medium flow direction switching device 22 and the heat medium flow direction switching device 23 correspond to at least one flow direction switching means having a valve body. The cooling outward-flow main pipe 307 corresponds to a first pipeline through which guiding of the heat medium is selectively switched by the heat medium flow direction switching device 22. The heating outward-flow main pipe 308 corresponds to a second pipeline through which guiding of the heat medium is selectively switched by the heat medium flow direction switching device 22. The cooling return-flow main pipe 305 corresponds to the first pipeline through which guiding of the heat medium is selectively switched by the heat medium flow direction switching device 23. The heating return-flow main pipe 306 corresponds to the second pipeline through which guiding of the heat medium is selectively switched by the heat medium flow direction switching device 23.

That is, the valve block unit 300 according to Embodiment 1 is constituted by four valve blocks, in which one set is composed of the heat medium flow direction switching device 22, the cooling outward-flow main pipe 307, the heating outward-flow main pipe 308, and the first branch pipe 301 and another set is composed of the heat medium flow direction switching device 23, the cooling return-flow main pipe 305, the heating return-flow main pipe 306, and the second branch pipe 302 are formed, are connected. In Fig. 3, a state in which the heat medium flow control device 24 is disposed in the valve block unit 300 is illustrated as an example, but the heat medium flow control device 24 is not indispensable or may be disposed on the second branch pipe 302 side.

This valve block unit 300 is preferably formed by a material with small heat conductivity (a metal material or a plastic material) as a main material since hot water and cold water flow through the inside, thermal interference occurs, which incurs performance deterioration. The metal material includes stainless, brass, bronze, aluminum and the like. The plastic material includes PPS (polyphenylenesulfide), PPE (polyphenyleneether), cross-linked polyethylene or polybutene and the like, for example. In order to reduce the weight of the valve block unit 300, the plastic material is used as a main material further preferably.

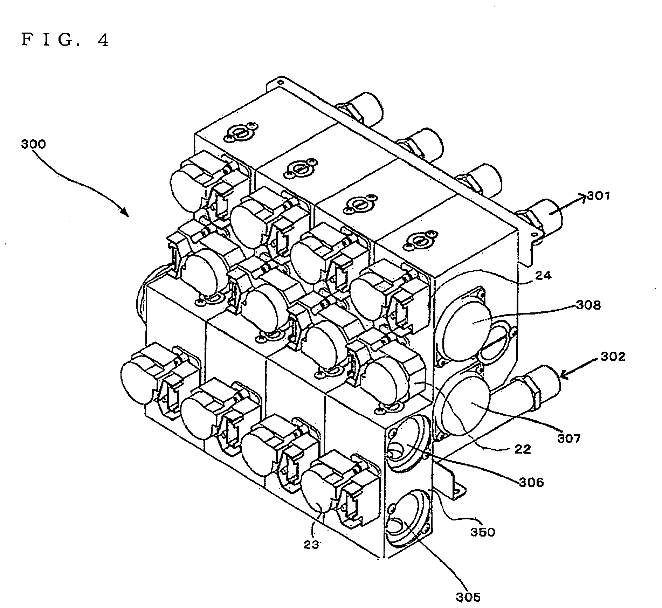

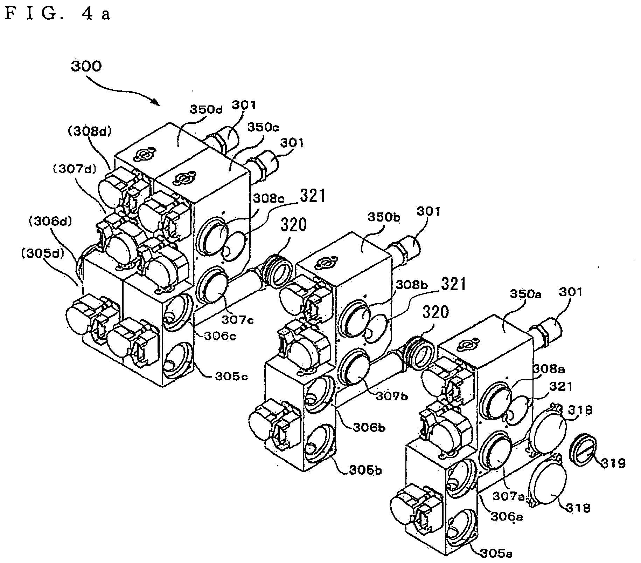

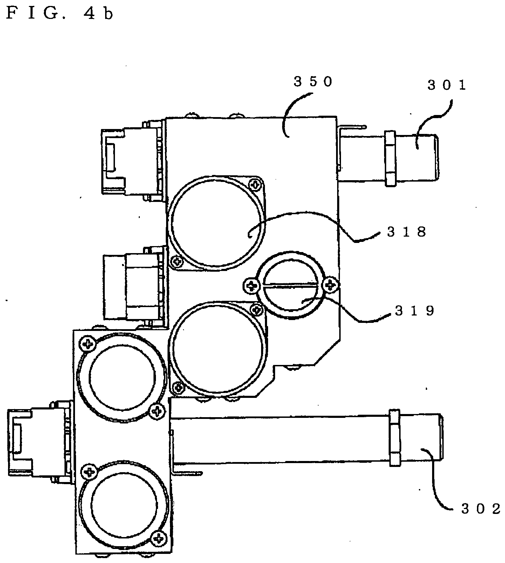

Fig. 4 is a perspective view illustrating the structure of the valve block unit 300 in detail. On the basis of Fig. 4, the configuration of the valve block unit 300 will be described in more detail. The valve block unit 300 shown in Fig. 4 has four valve blocks 350 (valve block 350a to valve block 350d) connected, which are connected to the four indoor units 2. The valve block 350 has the heat medium flow direction switching device 22, the heat medium flow direction switching device 23, and the heat medium flow control device 24, which covers one branch portion. That is, the valve block unit 300 according to the Embodiment 1 has four branches.

Fig. 4a is an exploded perspective view illustrating a state in which the valve block unit 300 is exploded. On the basis of Fig. 4a, assembling of the valve block unit 300 branching into four parts will be described. As described above, the valve block unit 300 is formed by the valve block 350a, the valve block 350b, the valve block 350c, and the valve block 350d connected to each other.

Then, the cooling outward-flow main pipe 307 (illustrated as a cooling outward-flow main pipe 307a, a cooling outward-flow main pipe 307b, a cooling outward-flow main pipe 307c, and a cooling outward-flow main pipe 307d from the right side in the figure), the heating outward-flow main pipe 308 (illustrated as a heating outward-flow main pipe 308a, a heating outward-flow main pipe 308b, a heating outward-flow main pipe 308c, and a heating outward-flow main pipe 308d from the right side in the figure), the cooling return-flow main pipe 305 (illustrated as a cooling return-flow main pipe 305a, a cooling return-flow main pipe 305b, a cooling return-flow main pipe 305c, and a cooling return-flow main pipe 305d from the right side in the figure), and the heating return-flow main pipe 306 (illustrated as a heating return-flow main pipe 306a, a heating retum-flow main pipe 306b, a heating return-flow main pipe 306c, and a heating return-flow main pipe 306d from the right side in the figure) of each valve block 350 are connected to each other, respectively, so as to form the main pipe (pipeline 5).

One end of each main pipe (the cooling outward-flow main pipe 307, the heating outward-flow main pipe 308, the cooling return-flow main pipe 305, and the heating retum-flow main pipe 306) is formed into a female shape and the other end is formed into a male shape capable of connecting to the female-shaped end so that the valve blocks 350 can be connected. And on the cooling outward-flow main pipe 307a and the heating outward-flow main pipe 308a of the valve block 350a located at one of the both ends of the valve block unit 300, caps 318 that cap them are disposed. On the other hand, on the cooling return-flow main pipe 305d and the heating return-flow main pipe 306d of the valve block 350d located at the other of the both ends of the valve block unit 300, caps 319 that cap them are disposed.

The cap 318 and the cap 319 are used for two main pipes of the four main pipes. That is, in the valve block 350a, the cooling outward-flow main pipe 307a and the heating outward-flow main pipe 308a are capped with the caps 318, while the cooling return-flow main pipe 305a and the heating return-flow main pipe 306a are not capped with the caps 319. The heating return-flow main pipe 306a is connected to the suction side of the heating-side pump (first heat medium delivery device 21a) and the cooling return-flow main pipe 305a is connected to the suction side of the cooling side pump (second heat medium delivery device 21b), respectively.

On the other hand, in the valve block 350d, the cooling return-flow main pipe 305d and the heating return-flow main pipe 306d are capped with the caps 319, while the cooling outward-flow main pipe 307d and the heating outward-flow main pipe 308d are not capped with the caps 318. The heating outward-flow main pipe 308d is connected to the discharge side of the heating-side pump and the cooling outward-flow main pipe 307d is connected to the discharge side of the cooling side pump, respectively. The cap 318 and the cap 319 have shapes corresponding to the shape of the end of each pipeline. As shown in Fig. 4a, the cap 318 has a shape according to the male pipeline end (a lid shape so as to cover the pipeline end) and the cap 319 has a shape according to the female pipeline end (a plug shape to be fitted in the pipeline).

On the other hand, in the valve block 350d, the cooling return-flow main pipe 305d and the heating return-flow main pipe 306d are capped with the caps 319, while the cooling outward-flow main pipe 307d and the heating outward-flow main pipe 308d are not capped with the caps 318. The heating outward-flow main pipe 308d is connected to the discharge side of the heating-side pump and the cooling outward-flow main pipe 307d is connected to the discharge side of the cooling side pump, respectively. The cap 318 and the cap 319 have shapes corresponding to the shape of the end of each pipeline. As shown in Fig. 4a, the cap 318 has a shape according to the male pipeline end (a lid shape so as to cover the pipeline end). As shown in Fig. 4b, a lug is disposed on the cap end so that it can be fixed with a screw and screwed into the valve block main body. The cap 319 has a shape according to the female pipeline end and is fixed by a screw head as shown in Fig. 4b.

As is known from this Fig. 4a, the valve block unit 300 is capable of switching the heat medium flow direction and forms each main pipe by connecting a plurality of valve blocks 350. According to this valve block unit 300, pipelines around the valve can be simplified as compared with a device in which the flow direction switching device and the pipeline are provided separately. Therefore, the unit on which the valve block unit 300 is mounted (the relay unit 3 in Embodiment 1) can be made compact. A sacrificed hole 321 shown in Fig. 4a is a hole required for forming the channel of the valve block 350. Since the sacrificed hole 321 needs to be independent among the valve blocks 350, it is shut off by a joint 320 in Fig. 4a.

Fig. 5 is a longitudinal sectional view illustrating a sectional configuration of the valve block 350 in a simplified manner. On the basis of Fig. 5, the configuration of the valve block 350 constituting the valve block unit 300 will be described along with the flow of the heat medium. The first branch pipe 301 corresponds to a third pipeline that selectively communicates with the cooling outward-flow main pipe 307 or the heating outward-flow main pipe 308. That is, the first branch pipe 301 communicates with the cooling outward-flow main pipe 307 or the heating outward-flow main pipe 308 selectively switched by the heat medium flow direction switching device 22. The second branch pipe 302 corresponds to the third pipeline that selectively communicates with the cooling return-flow main pipe 305 or the heating return-flow main pipe 306. That is, the second branch pipe 302 communicates with the cooling return-flow main pipe 305 or the heating return-flow main pipe 306 selectively switched by the heat medium flow direction switching device 23. That is, the second branch pipe 302 communicates with the cooling return-flow main pipe 305 or the heating return-flow main pipe 306 selectively switched by the heat medium flow direction switching device 23.

Here, as shown in Fig. 5, the third heat medium temperature detecting means 33 and the fourth heat medium temperature detecting means 34 are incorporated in the pipeline. The third heat medium temperature detecting means 33 is incorporated in the channel in the block. For the first branch pipe 301 and the second branch pipe 302, a copper pipe is used, and if the valve block 350 is made of plastic, the branch pipes 301 and 302 are brazed and connected to an extension pipeline during an installation work. At this time, since it is likely that the plastic of the valve block 350 is melted by heat conduction, the brazing is performed in a state in which the branch pipes 301 and 302 are removed from the valve block 350. In the case of fixation on the surface of the pipeline as in the prior-art temperature detecting means, the temperature detecting means is likely to be removed during brazing, and re-installation of the temperature detecting means might be forgotten when the work is completed. Thus, reliability of the device is lowered. Then, as shown in Fig. 5, by embedding the third heat medium temperature detecting means 33 and the fourth heat medium temperature detecting means 34 in the pipeline or in the channel, the risk of removal of the temperature detecting means can be eliminated, and reliability of the device is improved.

As is known from Fig. 4a, the valve block unit 300 is capable of switching the heat medium channel and also forms each main pipe by connecting the plurality of valve blocks 350. According to this valve block unit 300, as compared with the device in which the flow direction switching device and the pipeline are provided separately, the pipeline around the valve can be simplified. Therefore, the unit on which the valve block unit 300 is mounted (the relay unit 3 in Embodiment 1) can be made compact.

Fig. 5 is a longitudinal sectional view illustrating a sectional configuration of the valve block 350 in a simplified manner. On the basis of Fig. 5, the configuration of the valve block 350 constituting the valve block unit 300 will be described along with the flow of the heat medium. The first branch pipe 301 corresponds to the third pipeline that selectively communicates with the cooling outward-flow main pipe 307 or the heating outward-flow main pipe 308. That is, the first branch pipe 301 communicates with the cooling outward-flow main pipe 307 or the heating outward-flow main pipe 308 selectively switched by the heat medium flow direction switching device 22. The second branch pipe 302 corresponds to the third pipeline that selectively communicates with the cooling return-flow main pipe 305 or the heating return-flow main pipe 306. That is, the second branch pipe 302 communicates with the cooling return-flow main pipe 305 or the heating return-flow main pipe 306 selectively switched by the heat medium flow direction switching device 23.

As described above, in each valve block, the heat medium flow direction switching device 22, the heat medium flow direction switching device 23, and the heat medium flow control device 24 are disposed. The heat medium flow direction switching device 22 is constituted by a valve body rotating means 310, a valve body 304a, and a valve rod 313 that connects them. The valve body rotating means 310 is to rotate the valve body 304a around a rotary shaft, not shown. The rotation of the valve body rotating means 310 is transmitted to the valve body 304a via the valve rod 313.

The heat medium flow direction switching device 23 is constituted by a valve body rotating means 309, a valve body 304b, and a valve rod 312 that connects them. The valve body rotating means 309 is to rotate the valve body 304b around a rotary shaft, not shown. The rotation of the valve body rotating means 309 is transferred to the valve body 304b via the valve rod 312. The heat medium flow control device 24 is constituted by a valve body rotating means 311, a valve body 303, and a valve rod 314 that connects them. The valve body rotating means 311 is to rotate the valve body 303 around a rotary shaft, not shown. The rotation of the valve body rotating means 311 is transferred to the valve body 303 via the valve rod 314.

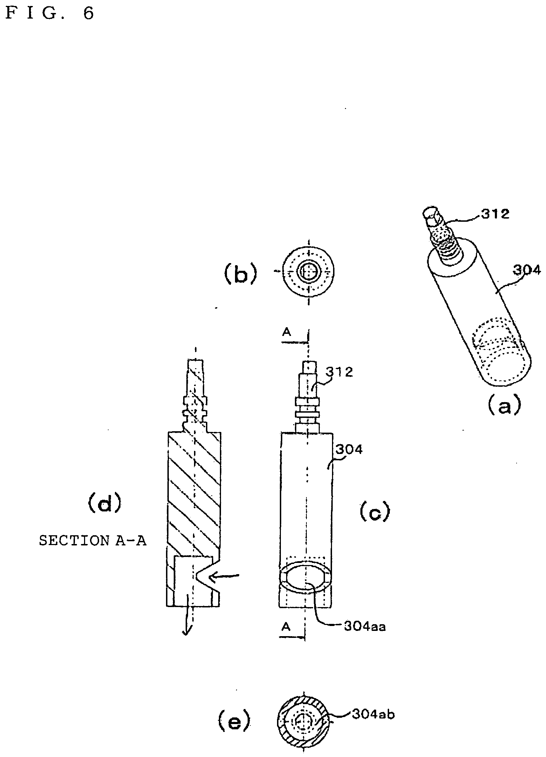

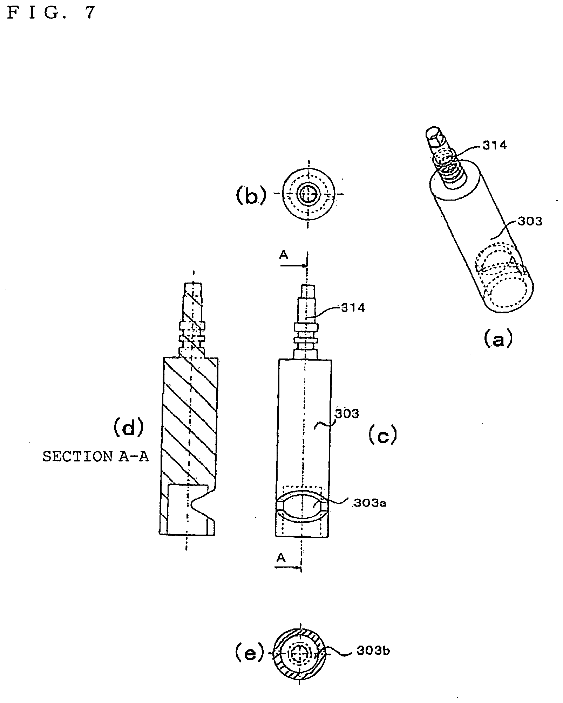

As the valve body rotating means 309, the valve body rotating means 310, and the valve body rotating means 311, they can be driven by using a stepping motor and giving a pulse signal by control means, not shown, for example. Instead of the stepping motor, the valve body rotating means 309, the valve body rotating means 310, and the valve body rotating means 311 may be constituted by other motors such as a geared motor or the like. Also, the valve body 304a and the valve body 304b will be described in detail in Fig. 6 and the valve body 303 in Fig. 7, respectively.

The valve body 304a, which is the sending side of the heat medium flow direction switching device 22, is disposed in a connection portion between the first branch pipe 301 and the cooling outward-flow main pipe 307 as well as the heating outward-flow main pipe 308. Similarly, the valve body 304b, which is the sending side of the heat medium flow direction switching device 23, is disposed in a connection portion between the second branch pipe 302 and the cooling return-flow main pipe 305 or the heating return-flow main pipe 306. That is, the valve body 304a and the valve body 304b is rotated so as to communicate with the cooling-main pipe (a broken line arrow shown in Fig. 5) or the heating-main pipe (a solid line arrow shown in Fig. 5) and to switch between the cooling and the heating. If the valve body 303 of the heat medium flow control device 24 is rotated, an opening area is changed, and a flow rate of the heat medium to be sent into the indoor unit 2 can be adjusted.

Fig. 6 is an explanatory diagram for explaining the valve body 304 (the valve body 304a and the valve body 304b). On the basis of Fig. 6, the valve body 304 will be described in detail. Fig. 6a is a perspective view of the valve body 304, Fig. 6b is a plan view of the valve body 304, Fig. 6c is a front view of the valve body 304 (side view seen from the side of an opening portion formed surface), Fig. 6d is a left sectional view of the valve body 304, and Fig. 6e is a bottom view of the valve body 304, respectively. In Fig. 6, the valve rod 312 is also illustrated (the same applies to the valve rod 313). In Fig. 6, the longitudinal direction of the valve body 304 is illustrated vertically, but in actuality, the valve body 304 is arranged so that the longitudinal direction thereof is laid horizontally, as shown in Fig. 5.

The valve body 304 is formed in a columnar shape. In this valve body 304, an opening portion 304aa having an oval shape (a shape when the opening portion 304aa is seen on a front view) is formed. When this opening portion 304aa is seen on a side view, it has a tapered shape whose diameter is reduced toward the center axis direction of the valve body 304. The inside of the valve body 304 at a position where the opening portion 304aa is formed is hollow, and a channel 304ab communicating with the opening portion 304aa is formed.

That is, in a state in which the opening portion 304aa of the valve body 304a is oriented downward (lower side in the state arranged as in Fig. 5), the first branch pipe 301 communicates with the cooling outward-flow main pipe 307. In a state in which the opening portion 304aa is oriented to the cooling outward-flow main pipe 307 side, the heat medium passes through the opening portion 304aa, passes through the inside of the valve body 304a, passes through the channel 304ab and is fed into the indoor unit 2 (a broken-line arrow shown in Fig. 5). On the other hand, in a state in which the opening portion 304aa of the valve body 304a is oriented upward (upper side in the state arranged as in Fig. 5), the first branch pipe 301 communicates with the heating outward-flow main pipe 308. In a state in which the opening portion 304aa is oriented to the heating outward-flow main pipe 308 side, the heat medium passes through the opening portion 304aa, passes through the inside of the valve body 304a, passes through the channel 304ab and is fed into the indoor unit 2 (a solid-line arrow shown in Fig. 5).

Similarly, in a state in which an opening portion 304aa of the valve body 304b is oriented downward (lower side in the state arranged as in Fig. 5), the second branch pipe 302 communicates with the cooling return-flow main pipe 305. In a state in which the opening portion 304aa is oriented to the cooling return-flow main pipe 305 side, the heat medium passes through the channel 304ab, passes through the inside of the valve body 304b, passes through the opening portion 304aa and flows into the cooling return-flow main pipe 305 (a broken-line arrow shown in Fig. 5). On the other hand, in a state in which an opening portion 304aa of the valve body 304b is oriented upward (upper side in the state arranged as in Fig. 5), the second branch pipe 302 communicates with the heating return-flow main pipe 306. In a state in which the opening portion 304aa is oriented to the heating return-flow main pipe 306 side, the heat medium passes through the channel 304ab, passes through the inside of the valve body 304b, passes through the opening portion 304aa and flows into the heating return-flow main pipe 306 (a broken-line arrow shown in Fig. 5).

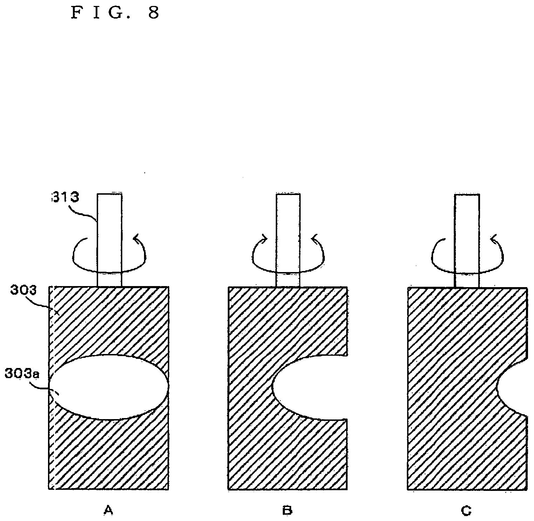

Fig. 7 is an explanatory diagram for explaining the valve body 303. Fig. 8 is an outline diagram illustrating a rotating state of the valve body 303. On the basis of Figs. 7 and 8, the valve body 303 will be described in detail. Fig. 7a is a perspective view of the valve body 303, Fig. 7b is a plan view of the valve body 303, Fig. 7c is a front view of the valve body 303 (side view seen from the side of an opening portion formed surface), Fig. 7d is left sectional view of the valve body 303, and Fig. 7e is a bottom view of the valve body 303. In Fig. 7, the valve rod 314 is also illustrated. In Fig. 7, the longitudinal direction of the valve body 303 is illustrated vertically, but in actuality, the valve body 303 is arranged so that the longitudinal direction thereof is laid horizontally, as shown in Fig. 5.

The valve body 303 is a valve body of the heat medium flow control device 24 that adjusts the flow rate of the heat medium flowing into the indoor unit 2. This valve body 303 is constituted similarly to the valve body 304 described in Fig. 6. That is, the valve body 303 is formed in a columnar shape, an opening portion 303a having an oval shape (a shape when the opening portion 303a is seen on a front view) is formed, the inside of the valve body 303 at a position where the opening portion 303a is formed is hollow, and a channel 303b communicating with the opening portion 303a is formed.

An operation of the heat medium flow control device 24 will be described in brief. On the basis of the information obtained from the third heat medium temperature detecting means 33 and the fourth heat medium temperature detecting means 34, the controller, not shown, calculates a required opening degree and transmits a required pulse number to the valve body rotating means 311. The valve body rotating means 311 rotates only by the received required pulse number and rotates the valve body 303. As shown in Fig. 8, by the rotation of the valve body 303, the opening area of the opening portion 303a can be adjusted, and as a result, the flow rate of the heat medium can be adjusted. That is, by adjusting the opening area of the opening portion 303a (a full-open state in Fig. 8A, a half-open state in Fig. 8B or an opening degree smaller than the half-open in Fig. 8C or the like), the flow rate of the heat medium flowing through the first branch pipe 301 can be variably adjusted.

As described above, the cooling outward-flow main pipe 307 and the heating return-flow main pipe 306 are arranged at adjacent positions (positions adjacent horizontally (in the right and left direction) at the substantially same height). Thus, the height of the valve block 350 (the length in the vertical direction in the state arranged as in Fig. 5) can be lowered. Also, since the cooling outward-flow main pipe 307, the heating outward-flow main pipe 308, the cooling return-flow main pipe 305, and the heating return-flow main pipe 306 are incorporated in the one valve block 350, the valve block 350 can be made compact as compared with the device in which the main pipes are provided separately.

In the case of the cooling-only operation or the heating-only operation, the full amount of the heat medium flows through the cooling outward-flow main pipe 307, the heating outward-flow main pipe 308, the cooling return-flow main pipe 305, and the heating return-flow main pipe 306, and the diameter of the main pipe (pipeline 5) constituted by them needs to be made larger. For example, in the cooling-only operation or the heating-only operation if water is used for the heat medium in the capacity of approximately 10 horse power, water at the rate of 85 liters/min. flows. If water is used as the medium, from the view point of prevention of inlet attack, the flow velocity is kept to 2.0 [m/s] or less. By setting the thickness of the pipeline to 1.0 [mm], a pipeline having a pipeline diameter of approximately 32 [mm] needs to be selected. If such a thick pipeline is to be bent or worked, there are many restrictions such that the bending R cannot be made small and a considerable space is required, and thus, the device becomes considerably large. On the other hand, in the valve block 350 according to this embodiment, four main pipeline constituting portions and the valve body 304 are disposed in the one valve block 350, and the plurality of valve blocks 350 are connected so that the cooling outward-flow main pipe 307, the heating outward-flow main pipe 308, the cooling return-flow main pipe 305, and the heating return-flow main pipe 306 are automatically formed, the pipelines around the valve are simplified, and drastic size reduction can be realized. Also, in order to facilitate connection of the valve block 350, the connection portions are formed in the male and female shapes, and a seal is formed by an O-ring. As a result, manufacturing time is drastically reduced, and productivity is improved.

Also, by installing the valve body 303, the valve body 304a, and the valve body 304b such that the longitudinal directions thereof are not vertical (perpendicular direction) but horizontal, the first branch pipe 301 and the second branch pipe 302 to the indoor unit 2 can be also made lateral pipelines, and the height of the valve block 350 (the length in the vertical direction in the state arranged as in Fig. 5) can be further reduced. Moreover, by installing the valve body rotating means 309, the valve body rotating means 310, and the valve body rotating means 311 horizontally, the thickness of the valve block 350 can be drastically reduced (reduction in the length in the vertical direction in the state arranged as in Fig. 5). Since the relay unit 3 on which the valve block unit 300 is mounted is contained in a small place such as in the attic in many cases, the reduction in the height direction, that is, making a thinner structure is an important factor.

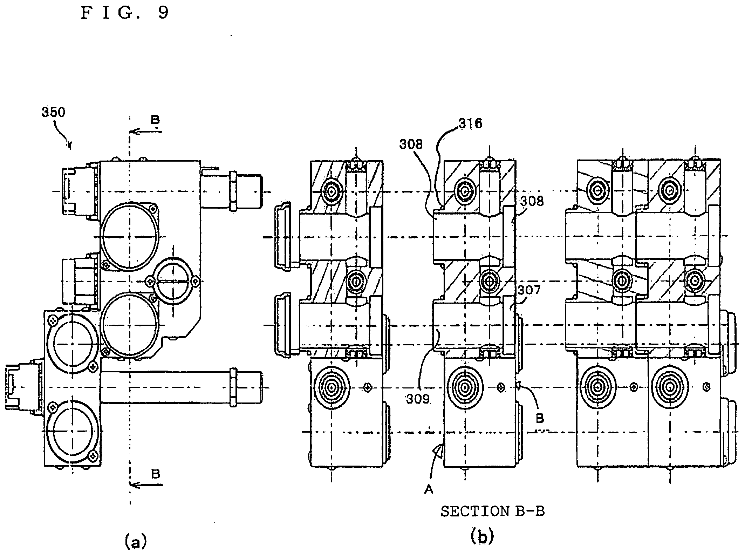

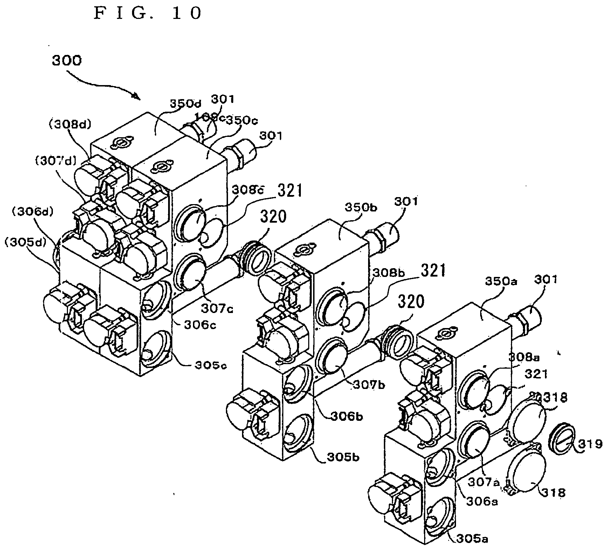

Figs. 9 and 10 are explanatory diagrams for explaining connection of the valve block 350. On the basis of Figs. 9 and 10, the connection of the valve block 350 will be described in detail. Fig. 9a shows a side view of the valve block 350 and Fig. 9b shows a B-B sectional view of Fig. 9a in a state in which the valve block 350 is to be connected, respectively. Also, Fig. 10 shows a perspective view of a state in which the valve block 350 is to be connected. As described above, one end of each main pipe (the cooling outward-flow main pipe 307, the heating outward-flow main pipe 308, the cooling return-flow main pipe 305, and the heating return-flow main pipe 306) is formed in the female shape and the other end in the male shape capable of being connected to the female-shaped end.

The end portion of the heating outward-flow main pipe 308 on the side face A side (left side in the figure) of the valve block 350 is a male-shaped connection portion. Around the end portion of this heating outward-flow main pipe 308, seal means 316 is mounted so that the valve block can be connected to another valve block 350. Also, the end portion of the cooling outward-flow main pipe 307 on the side face B side (right side in the figure) of the valve block 350 is a female-shaped connection portion. As the seal means 316, an O-ring or the like is preferably used. Also, other seal materials such as flat packing may be used for the seal means 316.

By employing the above structure, as shown in Figs. 9 and 10, the plurality of valve blocks 350 can be connected easily, and the number of branches can be flexibly changed. Also, since the valve blocks 350 are constructed so as to be easily connected, workability (productivity) of the valve block 350 is also improved, and cost reduction can be realized. In Figs. 9 and 10, the cooling outward-flow main pipe 307 and the heating outward-flow main pipe 308 are described as an example, but the same applies to the cooling return-flow main pipe 305 and the heating return-flow main pipe 306.

If the distance between the pipelines 5 on the cooling side (cooling outward-flow main pipe 307 and the cooling return-flow main pipe 305) and the pipelines 5 on the heating side (heating outward-flow main pipe 308 and the heating return-flow main pipe 306) is short, thermal interference might occur. If thermal interference occurs, the temperature of the heat medium flowing through the pipeline 5 on the cooling side is raised, and to the contrary, the temperature of the heat medium flowing through the pipeline 5 on the heating side is lowered, which might lead to performance deterioration. Thus, it is important to examine the distance between the pipeline 5 on the cooling side and the pipeline 5 on the heating side and the temperature change caused by that.

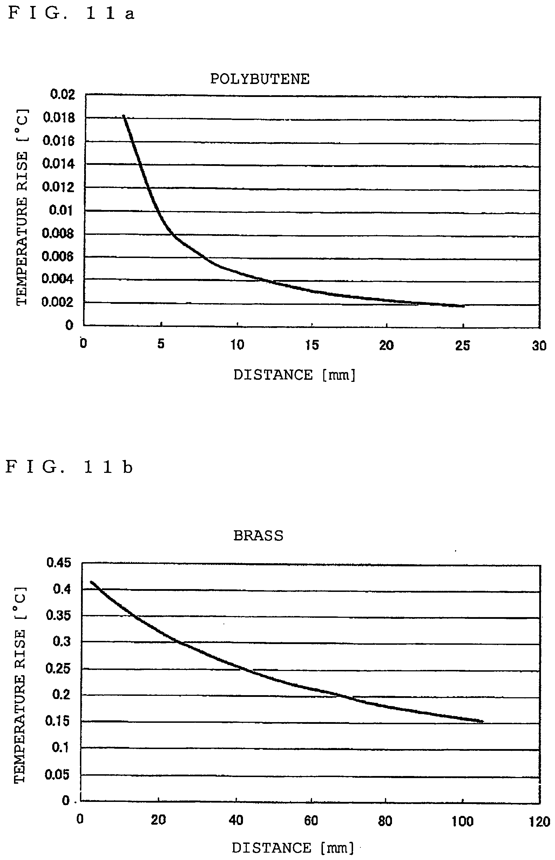

Fig. 11a is a graph illustrating an example of a relationship between the pipeline distance and the temperature rise. On the basis of Fig. 11a, the relationship of the distance between the pipeline 5 on the cooling side and the pipeline 5 on the heating side to the temperature change caused by that will be described. In Fig. 11a, the horizontal axis indicates the pipeline distance [m] and the vertical axis indicates the temperature rise [°C], respectively. In Fig. 11a, a calculation result is shown as an example, assuming that the temperature of hot water (the temperature of the heat medium flowing through the main pipe on the heating side) is 45°C, the temperature of cold water (the temperature of the heat medium flowing through the main pipe on the cooling side) is 10°C, the pipeline material is polybutene, and the heat conductivity is 0.20 (W/mK). The pipeline diameter is 38 [mm] and the contact distance is 1 [m].

From Fig. 11a, it is known that the temperature change is saturated when the distance is approximately 15 mm (1.5 cm). From this result, it is known that the thermal interference can be suppressed by ensuring 15 mm or more for the distance between the main pipe on the cooling side and the main pipe on the heating side. Since the heat conductivity is different depending on the pipeline material, the relationship between the temperature rise and the pipeline distance is preferably examined for each heat conductivity. Thus, the examination result when the brass is used for the body material is shown in Fig. 11b.

From Fig. 11b, it is known that if the pipeline material is brass, the temperature change is saturated when the distance is approximately 100 mm. From this result, it is known that the thermal interference can be suppressed by ensuring 100 mm or more for the distance between the main pipe on the cooling side and the main pipe on the heating side. By ensuring 100 [mm] or more for the distance between the main pipe on the cooling side and the main pipe on the heating side, the thermal interference can be prevented, but the valve body block becomes extremely large, and the merit of size reduction by the valve-block unit is reduced. That is, if the material with large heat conductivity such as brass, copper, iron, aluminum and the like is used as the body material of the valve block, the main pipe on the cooling side needs to be thermally shut off from the main pipe on the heating side.

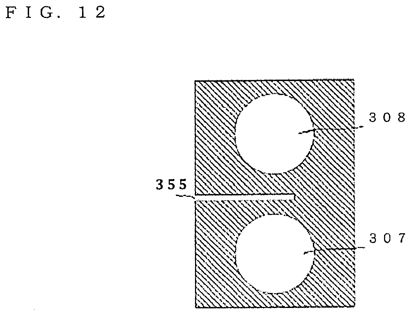

Fig. 12 is a diagram according to the invention for suppressing thermal interference if prevention of the thermal interference is difficult with the above-described distance. On the basis of Fig. 12, another means that suppresses thermal interference between the pipeline 5 on the cooling side and the pipeline 5 on the heating side will be described. In Fig. 11a and Fig. 11b, the example in which the thermal interference is suppressed by the pipeline distance was described, but in Fig. 12, the thermal interference is suppressed by forming a slit 355 between the pipeline 5 on the cooling side and the pipeline 5 on the heating side so as to reduce an influence of heat conductivity is illustrated. As shown in Fig. 12, the thermal interference can be also suppressed by forming the slit 355. The thermal interference may be suppressed both by the pipeline distance and the slit.

In order to reduce the size of the valve-block unit, an upper limit of the distance between the main pipe on the cooling side and the main pipe on the heating side is considered to be approximately 20 [mm], and the heat conductivity at that time is approximately 1.0 [W/mK]. Fig. 11c shows a relationship of the distance between the main pipe on the cooling side and the main pipe on the heating side to the temperature rise at 1.0 [W/mK]. As is known from Fig. 11c, it is saturated approximately around 20 [mm]. The heat conductivity of cross-linked polyethylene is approximately 0.4 [W/mK], and the distance between the cooling-main pipe and the heating-main pipe required for saturation of the temperature rise is approximately 15 mm. Also, the heat conductivity of PPS is approximately 0.22 [W/mK], and thermal interference can be prevented by ensuring the same distance (15 mm) as that for polybutene.

In Embodiment 1, the example in which a near-azeotropic refrigerant such as R410A and R404A and the like, a nonazeotropic refrigerant mixture such as R407C and the like, a refrigerant having a relatively small global warming potential such as CF₃CF=CH₂ and the like including a double bond in the chemical formula or a mixture thereof or a natural refrigerant such as carbon dioxide, propane and the like can be used as the heat-source-side refrigerant as described above is described, but the refrigerant is not limited by those cited above. Also, in Embodiment 1, the example in which the accumulator 17 is disposed in the outdoor unit 1 is described, but without the accumulator 17, the same operation is performed and the same advantages are exerted.

Also, in general, an air blowing device is disposed in the heat-source-side heat exchanger 12 and the use-side heat exchanger 26 so that condensation or evaporation is promoted by air-blowing in many cases, but that example is not limiting. For example, as the use-side heat exchanger 26, a heat exchanger such as a panel heater using radiation can be used, and as the heat-source-side heat exchanger 12, a heat exchanger of a water-cooling type in which heat is moved by water or anti-freezing fluid can be used, and any type of heat exchanger can be used as long as its structure is capable of heat radiation or heat absorption.

The example in which the heat medium flow direction switching device 22, the heat medium c flow direction switching device 23, and the heat medium flow control device 24 are disposed corresponding to each of the use-side heat exchangers 26 is described, but that example is not limiting. For example, a plurality of them may be connected to one unit of the use-side heat exchanger 26. In this case, the heat medium flow direction switching device 22, the heat medium flow direction switching device 23, and the heat medium flow control device 24 connected to the same use-side heat exchanger 26 may be operated in the same way. Also, the example in which two units of the heat medium heat exchanger 15 are disposed is described, but naturally the number is not limiting, but three or more of them may be disposed as long as it is configured so that the heat medium can be cooled and/or heated.

Moreover, the example in which the third heat medium temperature detecting means 33 and the fourth heat medium temperature detecting means 34 are arranged inside the relay unit 3 is illustrated, but some of or all of them may be arranged inside the indoor unit 2. If they are arranged in the relay unit 3, the valves and pumps on the heat medium side and the like can be concentrated in the same housing, which leads to an advantage of easy maintenance. On the other hand, if they are arranged inside the indoor unit 2, they can be handled easily as in the case of the expansion valve in a prior-art direct expansion type indoor unit, and since it is installed close to the use-side heat exchanger 26, there is an advantage that it is not affected by heat loss of the extended pipeline and controllability of a heat load in the indoor unit 2 is good. Also, in a system to which a plurality of the indoor units 2 are connected, even if the heat medium flow control device 24 fails in one indoor unit 2, the heat medium flow direction switching device 22 can be replaced relatively easily without stopping the other indoor units 2.

As described above, since the valve block unit 300 according to Embodiment 1 is constituted by connecting the plurality of valve blocks 350, drastic size reduction can be realized. That is, the size reduction of the relay unit 3 on which the valve block unit 300 is mounted can be realized. Also, since the valve block 350 can be easily connected, assembling performance is improved, and labor or time required for installation can be reduced. Moreover, since the valve block unit 300 suppresses thermal interference of the pipelines 5, performance deterioration can be reduced. Therefore, by using the valve block unit 300, contribution can be made to energy saving.

### Embodiment 2.

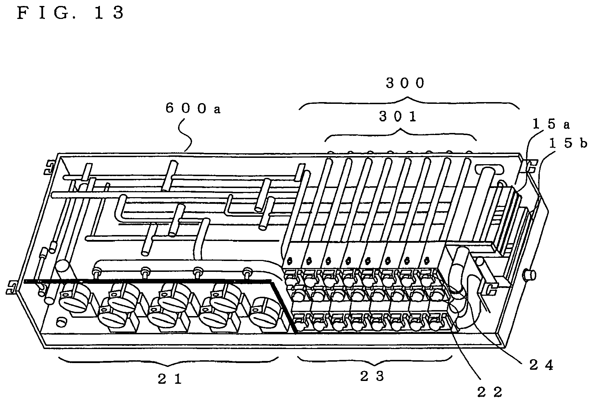

Fig. 13 is a view illustrating an arrangement structure of the relay unit 3, according to a preferred embodiment. The relay unit 3 in Fig. 13 has the valve block unit 300 formed by connecting 8 units of the valve blocks 350, and the heat medium can be made to branch into 8 units of the indoor units 2, respectively. By connecting the valve blocks 350 described in the above-described embodiment, the device and the pipeline that branch and merge the heat medium in each indoor unit 2 can be integrated and simplified, and moreover, by devising pipeline positions and the like, the relay unit 3 is thinned. Also, 8 units of the heat medium delivery devices 21 are provided. The 8 units of the heat medium delivery devices 21 are used in four each, respectively, for circulating the heat medium heated by the first heat medium heat exchanger 15a and the heat medium cooled by the second heat medium heat exchanger 15b, for example.

Here, the relay unit 3 in Fig. 13 has 8 units of the valve blocks 350 and 8 units of the heat medium delivery devices 21, but the numbers are not limiting. Also, though not shown in Fig. 13, the devices, equipment and means provided in the relay unit 3 in Fig. 1 and the like such as the gas-liquid separator 14, the expansion device 16 and the like are assumed to be mounted.

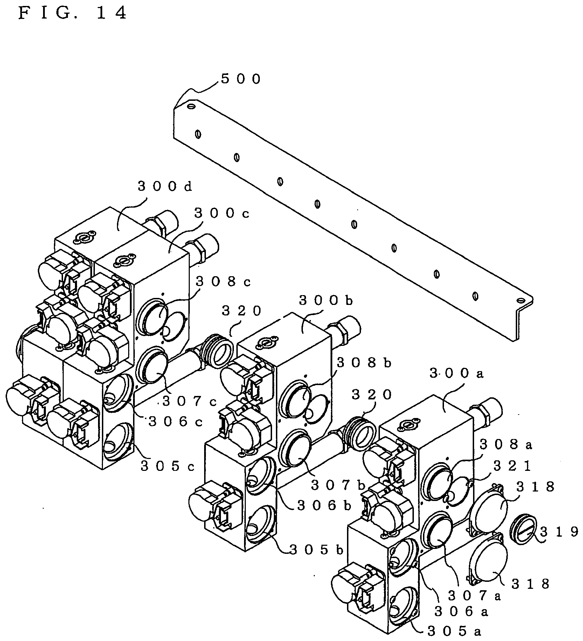

Fig. 14 is a view illustrating the connection of the valve blocks 350. As described above, the valve blocks 350 are connected so as to branch into the number of the indoor units 2. Then, each main pipe is connected. Through holes in each main pipe on the both ends are capped with the caps 318 and 319 if it is not to be connected to the outside pipeline, for example. Also, after the valve block 350 is connected, each valve block 350 is fixed by screwing or the like to a connecting plate 500 so as to form the valve block unit 300. As a result, each connected valve block 350 is contained in a housing 600 by preventing removal by a pressure of the heat medium passing through the main pipe and the like of the valve block unit 300.

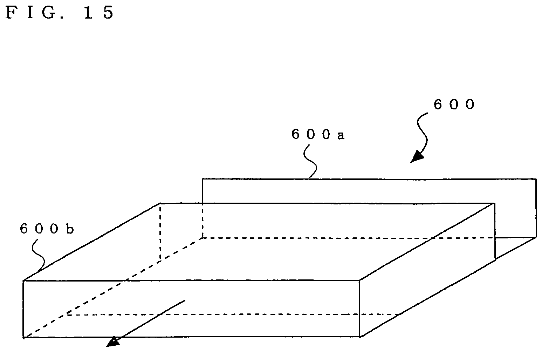

Fig. 15 is a diagram illustrating an outline of the structure of the housing 600 that contains the relay unit 3. The housing 600 of the relay unit 3 is constituted by combining sheet metals 600a and 600b. Here, the relay unit 3 is fixed to the sheet metal 600a and cannot be removed therefrom. On the other hand, the sheet metal 600b is usually screwed into the sheet metal 600a and can be slid in a direction of an arrow indicated in Fig. 15 by removing the screw. Thus, by sliding and opening/closing the sheet metal 600b in the direction of the side face, the relay unit 3 in the housing 600 can be exposed. By forming the housing 600 in the structure that can be slidably opened/closed the sheet metal 600b, even if the relay unit 3 is installed in a space small in the height direction such as in the attic, for example, the housing can be removed easily by sliding the sheet metal 600b in the direction other than the height direction. In Fig. 15, the front face, the upper face, and the right side face can be removed, and maintenance works such as component replacement, maintenance and the like of the relay unit 3 can be performed through these faces. The number of faces that can be slidably opened/closed is not particularly limited, here.

Also, the valve body rotating means 310, 309, and 311 of the heat medium delivery device 21, the heat medium flow direction switching devices 22 and 23, and the heat medium flow control device 24 are concentrated so as to be oriented to one direction so that the means can be replaced through the side face of the housing 600 of the relay unit 3. In the relay unit 3 of this embodiment, as shown in Fig. 13 and the like, at least the valve body rotating means 311, 310, and 309 and the actuator (driving device) of the heat medium delivery device 21 are concentrated so as to be oriented to the front, which is the direction in which the sheet metal 600b is slid.

Here, as shown in Figs. 4 and 5, the valve body rotating means 311, 310, and 309 are screwed into the side face of the valve block 350. For example, if the valve body rotating means 311, 310 or 309 or the like fails and is subjected to repair or replacement of a component, a worker or the like, for example, can put the head and hands into the space in the attic and remove the screw and the valve body rotating means 311, 310 and 309 from the relay unit 3. Also, mounting of the means and device relating to repair and component replacement on the relay unit 3 can be also performed in the same way. As described above, in the relay unit 3, by concentrating the means which is likely to require maintenance such as an actuator on the one face side (one side face side in this embodiment), component replacement and the like can be facilitated, and maintenance performance can be drastically improved.

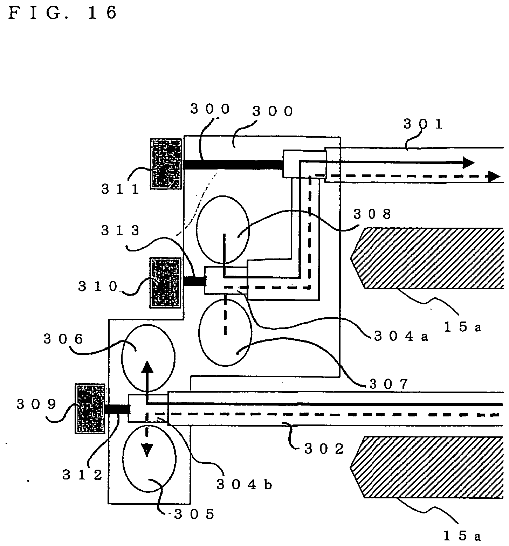

Fig. 16 is a diagram illustrating an arrangement relationship between the valve block unit 300 and the heat medium heat exchanger 15. As described above, in the relay unit 3 in this embodiment, the valve blocks 350 are connected so as to form the valve block unit 300 so as to promote thinning. Here, as shown in Figs. 4a, 5 and the like, on the return side to which the heat medium flows from the indoor unit, the heat medium flow direction switching device 23 and the return main pipes 305 and 306 are disposed. Also, on the outgoing side from which the heat medium flows to the indoor unit 2, the heat medium flow direction switching device 22 and the outgoing main pipes 307 and 308 are disposed. On the outgoing side, the heat medium flow control device 24 is further disposed. As described above, since the devices and pipelines are provided on the outgoing side and the return side, respectively, by generating a given distance between the first branch pipe 301 and the second branch pipe 302, a space is created.

Though not particularly illustrated in the above-described embodiment, in this embodiment, the heat medium heat exchanger 15 is constituted by a planar heat exchanger such as a micro-channel heat exchanger or the like, for example. Here, the micro-channel heat exchanger is a heat exchanger having a porous flat pipe, for example, and can efficiently exchange heat since its heat transfer area per volume (heat transfer surface density) is large.

Then, the heat medium heat exchanger 15a is inserted into and arranged in a space generated between the first branch pipe 301 and the second branch pipe 302. Also, the heat medium heat exchanger 15b is inserted into and arranged in a space generated at a lower part of the second branch pipe 302. Thus, when seen from the side face, as shown in Fig. 16, the first branch pipe 301, the heat medium heat exchanger 15a, the second branch pipe 302, and the heat medium heat exchanger 15b are arranged in this order from the upper side. In the case of the above-described cooling-main operation, for example, the heat medium heat exchanger 15a works as a condenser and heats the heat medium, while the heat medium heat exchanger 15b works as an evaporator and cools the heat medium. Thus, by overlapping the heat medium heat exchanger 15a and the heat medium heat exchanger 15b with each other, they thermally interfere with each other, which results in drastic performance deterioration. Thus, while overlapping of the heat medium heat exchanger 15a and the heat medium heat exchanger 15b is avoided, the space generated by the first branch pipe 301 and the second branch pipe 302 is effectively used for arrangement.

Also, in Fig. 16, the heat medium heat exchanger 15a is arranged above the heat medium heat exchanger 15b. Since the heat medium heat exchanger 15b works as an evaporator in the case of the cooling-main operation or the like, the temperature of the heat medium heat exchanger 15b becomes lower than the temperature of the ambient air and condensation might occur. The condensation water drops to the lower part of the relay unit 3 and is collected in a drain pan (not shown) and is emitted from the relay unit 3, but since the heat medium heat exchanger 15b is located on the lower side, the condensation water does not drop to the other devices and the like. Also, if the heat medium heat exchanger 15a works as a condenser, since it warms the ambient air, rising air is generated but since the heat medium heat exchanger 15a is located above the heat medium heat exchanger 15b, performance of the heat medium heat exchanger 15b as an evaporator is not lowered. From the above reasons, it is preferable that the heat medium heat exchanger 15a is installed on the upper side and the heat medium heat exchanger 15b on the lower side from the viewpoint of performances.

As described above, according to the relay unit 3 of preferred Embodiment 2, by connecting the valve blocks 350 so as to form the valve block unit 300, the devices and pipelines that branch the heat medium to each indoor unit 2 and merge it can be integrated and simplified, and by further devising the pipeline positions and the like, the relay unit 3 can be thinned. Also, since the heat medium heat exchanger 15, which is a planar heat exchanger such as a micro-channel type heat exchanger or the like, is inserted into and arranged in the space generated by the first branch pipe 301 and the second branch pipe 302, an unnecessary space is not created in the housing 600 but the space can be effectively used, and thinning of the relay unit 3 can be further promoted. Thus, even if the relay unit 3 is installed in an environment with harsh restrictions to one direction (height direction in the case of a space in the attic) such as a space in the attic, the device and means of the relay unit 3 can be efficiently contained in the housing 600 by effectively use the space. And the capacity of the housing 600 can be reduced, and contribution can be further made to thinning of the relay unit 3.

Also, by concentrating the means with high probability of maintenance such as an actuator on one of the faces of the relay unit 3, the maintenance work such as component replacement can be performed easily, and maintenance performance can be drastically improved. At this time, since the sheet metal 600b is formed to be slid in the side-face direction so that the housing 600 can be opened/closed, opening/closing can be performed without being obstructed by the space small in the height direction, for example, and the merit of making a thinner structure can be enjoyed.

### Embodiment 3.

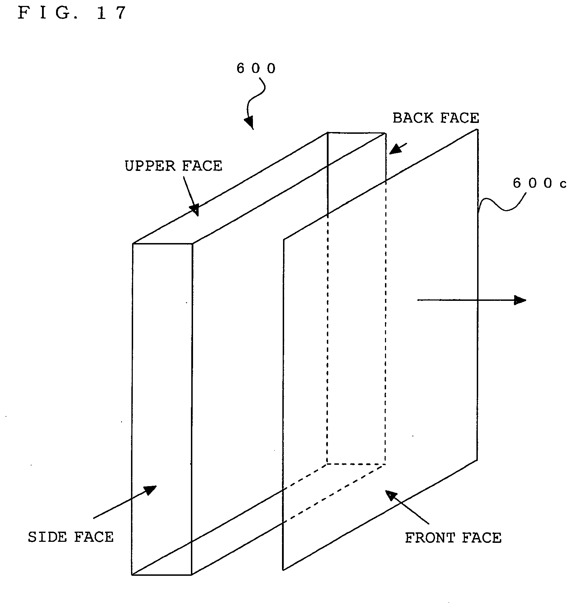

Fig. 17 is a diagram illustrating another example of an installed form of the relay unit 3. In the above-described embodiment, the relay unit 3 is described to be installed so-called horizontally in a space with restrictions in the height direction such as a space in the attic, but the installation place of the relay unit 3 is not limited. For example, as shown in Fig. 17, if the heat medium inverter is to be installed in a room where few people come in and out, the relay unit may be installed vertically so as to become long in the height direction. The advantage of making a thinner structure can be also exerted in the vertical installation.

Here, in the case of vertical installation, since the relay unit is hidden in the wall in many cases, it has a structure that the sheet metal 600c can be taken out from the front side unlike the horizontal installation type. In the valve block unit 300, the valve body rotating means 310, 309, and 311 are oriented to the front shown in Fig. 17 and arranged so that the valve body rotating means 310, 309, and 311 can be replaced easily. Also, since the heat medium delivery device 21 cannot suck the heat medium by itself, the heat medium delivery device is installed close to the bottom part of the relay unit 3 so that the suction side of the heat medium delivery device 21 is naturally filled with the heat medium in the structure. The bottom face of the housing 600 should be constructed so that the heat medium can be temporarily held and the heat medium can be emitted in preparation for condensation water or accidental leakage of the heat medium. For that purpose, the bottom face has the same structure as that of the so-called drain pan. Also, in the case of the vertical installation, since it is used by being embedded in the wall in many cases, the first branch pipe 301 and the second branch pipe 302 to each indoor unit come out of the upper face, the side face, and the rear face in the structure.

### Embodiment 4.

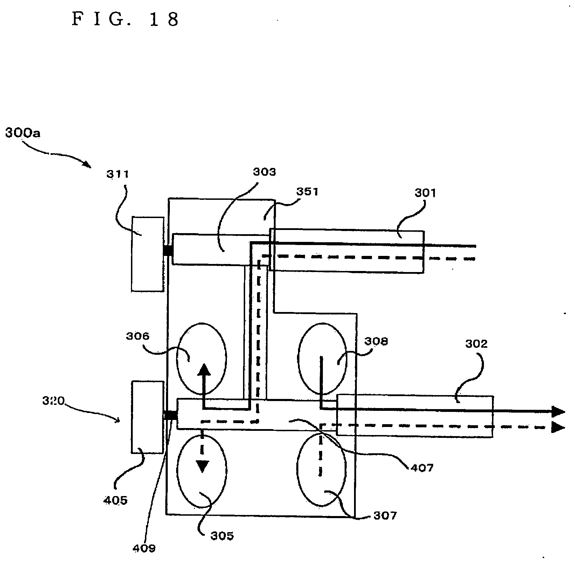

Fig. 18 is a longitudinal sectional view illustrating a sectional configuration of a valve block 351 constituting a valve block unit 300a according to Embodiment 4. of the present invention in a simplified manner. On the basis of Fig. 18, the configuration of the valve block 351 will be described along with the flow of the heat medium. In Embodiment 2, a difference from Embodiment 1 will be mainly described, and the same reference numerals are given to the same components as those in Embodiment 1 and the description will be omitted.

In Embodiment 1, the heat medium flow direction switching device 22 and the heat medium flow direction switching device 23 switch channels by the separate valve bodies (the valve body 304a and the valve body 304b) and the separate valve body rotating means (valve body rotating means 309 and the valve body rotating means 310). By means of the functions of the heat medium flow direction switching device 22 and the heat medium flow direction switching device 23, these operations are synchronized. That is, during the cooling, the heat medium flow direction switching device 22 directs the valve to the cooling direction and the heat medium flow direction switching device 23 also directs the valve to the cooling direction (See the broken-line arrow in Fig. 5). Also, during the heating, the heat medium flow direction switching device 22 directs the valve to the heating direction and the heat medium flow direction switching device 23 also directs the valve to the heating direction (See the solid-line arrow in Fig. 5).

Therefore, the heat medium flow direction switching device 22 and the heat medium flow direction switching device 23 can be handled by one valve body rotating means and one valve body. As shown in Fig. 18, the valve block 351 is configured so that the cooling outward-flow main pipe 307 and the cooling return-flow main pipe 305 as well as the heating outward-flow main pipe 308 and the heating return-flow main pipe 306 are disposed horizontally side by side, respectively. Also, in the valve block, 351, the heat medium flow direction switching device 25 that functions similarly to the heat medium flow direction switching device 22 and the heat medium flow direction switching device 23 is disposed. That is, the heat medium flow direction switching device 25 shares the function of the heat medium flow direction switching device 22 and the heat medium flow direction switching device 23.

That is, the heat medium flow direction switching device 25 selectively switches the cooling outward-flow main pipe 307 and the heating outward-flow main pipe 308 and also selectively switches the cooling return-flow main pipe 305 and the heating return-flow main pipe 306. This heat medium flow direction switching device 25 is constituted by the valve body rotating means 405, the valve body 407, and the valve rod 409 that connects them. The valve body rotating means 405 is to rotate the valve body 407 around the rotary shaft, not shown. The rotation of the valve body rotating means 405 is transmitted to the valve body 407 via the valve rod 409. In Fig. 18, the example in which the heat medium flow control device 24 is disposed in the valve block 351 is illustrated, but this heat medium flow control device 24 is not indispensable or may be disposed on the second branch pipe 302 side.

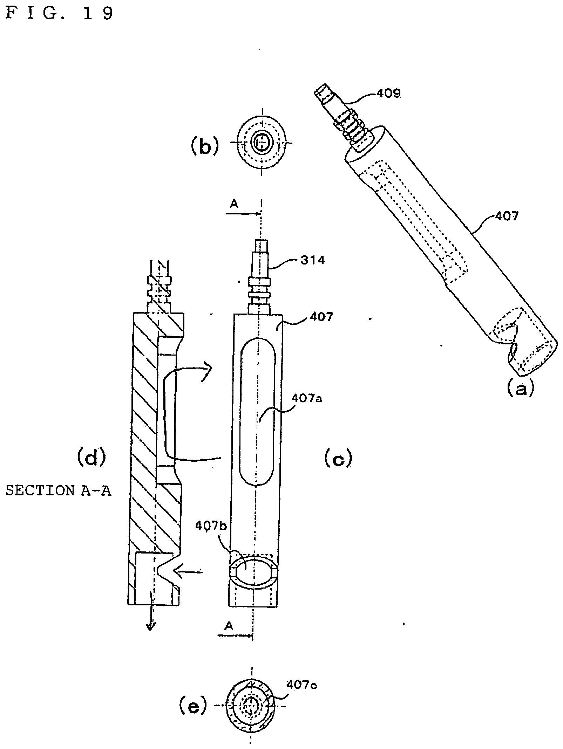

Fig. 19 is an explanatory diagram for explaining the valve body 407. On the basis of Fig. 19, the valve body 407 will be described in detail. Fig. 19a is a perspective view of the valve body 407, Fig. 19b is a plan view of the valve body 407, Fig. 19c is a front view of the valve body 407 (side view seen from the side of an opening portion formed surface), Fig. 19d is a left sectional view of the valve body 407, and Fig. 19e is a bottom view of the valve body 407, respectively. In Figs. 19, the valve rod 409 is also illustrated. In Fig. 19, the longitudinal direction of the valve body 407 is illustrated vertically, but in actuality, the valve body 407 is arranged so that the longitudinal direction thereof is laid horizontally as shown in Fig. 18.

The valve body 407 is formed in an elongated columnar shape. In this valve body 407, an opening portion 407a having a long hole shape (a shape when the opening portion 407a is seen on a front view) along the longitudinal direction of the valve body 407, an opening portion 407b having an oval shape (a shape when the opening portion 407b is seen on a front view), and an opening portion 407c communicating with the opening portion 407b are formed. The opening portion 407c is formed in the bottom face of the valve body 407. In order to have the opening portion 407b and the opening portion 407c communicate with each other, the inside of the valve body 407 is made hollow.

That is, in a state in which the opening portion 407b of the valve body 407 is oriented downward (lower side in the state arranged as in Fig. 18), the first branch pipe 301 communicates with the cooling outward-flow main pipe 307 via the opening portion 407c. In the state in which the opening portion 407b is oriented to the cooling outward-flow main pipe 307 side, the heat medium passes through the opening portion 407b and the opening portion 407c, and the heat medium is fed into the indoor unit 2 (the broken-line arrow in Fig. 18). On the other hand, in a state in which the opening portion 407b of the valve body 407 is oriented upward (upper side in the state arranged as in Fig. 18), the first branch pipe 301 communicates with the heating outward-flow main pipe 308 via the opening portion 407c. In the state in which the opening portion 407b is oriented to the heating outward-flow main pipe 308 side, the heat medium passes through the opening portion 407b and the opening portion 407c, and the heat medium is fed into the indoor unit 2 (the solid-line arrow in Fig. 18).

Similarly, in a state in which the opening portion 407a of the valve body 407 is oriented downward (lower side in the state arranged as in Fig. 18), the second branch pipe 302 communicates with the cooling return-flow main pipe 305. In the state in which the opening portion 407a is oriented to the cooling return-flow main pipe 305 side, the heat medium from the first branch pipe 301 flows into the cooling return-flow main pipe 305 through the opening portion 407a (the broken-line arrow shown in Fig. 18). On the other hand, in a state in which the opening portion 407a of the valve body 407 is oriented upward (upper side in the state arranged as in Fig. 18), the second branch pipe 302 communicates with the heating return-flow main pipe 306. In the state in which the opening portion 407a is oriented to the heating return-flow main pipe 306 side, the heat medium from the first branch pipe 301 flows into the heating return-flow main pipe 306 through the opening portion 407a (the solid-line arrow shown in Fig. 18).

By employing the above structure, the number of installed valve body rotating means can be reduced from 2 to 1. Thus, a cost can be reduced for the reduction. Also, since the heat medium flow direction switching devices are shared in each set, further size reduction is realized. Also, since the number of valve body rotating means is reduced, power consumption (current value) can be also reduced.

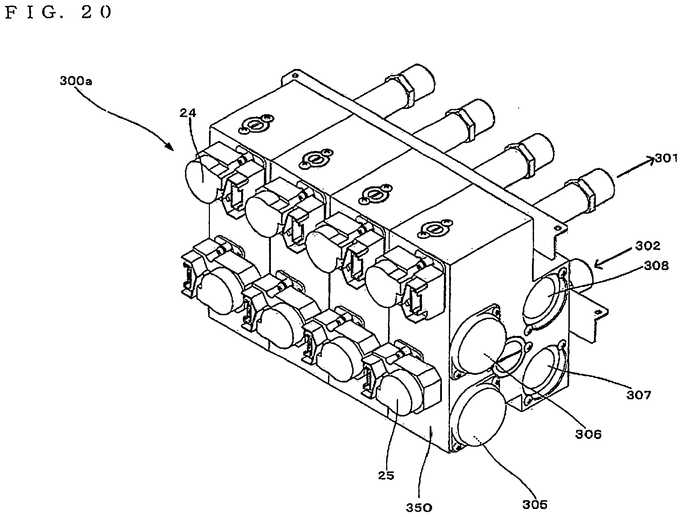

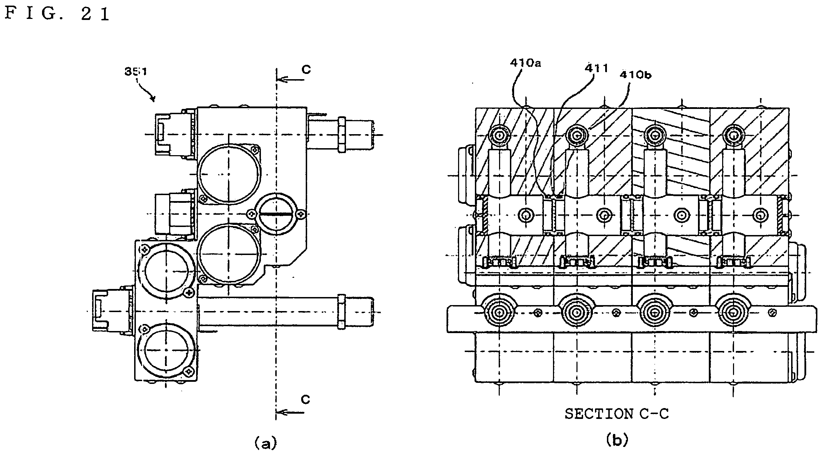

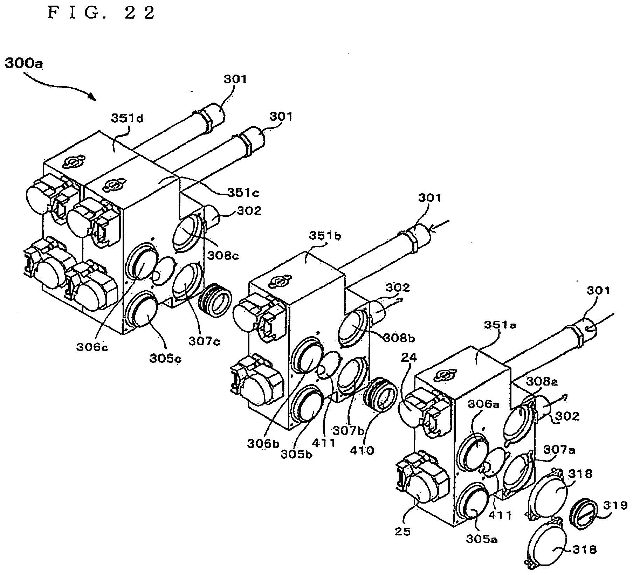

Fig. 20 is a perspective view illustrating the structure of the valve block unit 300a in detail. Figs. 21 and 22 are explanatory diagrams for explaining the connection of the valve block 351. On the basis of Figs. 20 to 22, the valve block 351 will be described in detail. Fig. 21a is a side view of the valve block 351, and Fig. 21b is a C-C sectional view of Fig. 21a in a state in which the valve block 351 is to be connected, respectively. Also, Fig. 22 is a perspective view illustrating a state in which the valve block 351 is to be connected.

The valve block unit 300a shown in Fig. 20 is constituted by connecting the four valve blocks 351 (the valve block 351a to the valve block 351d) and connected to four indoor units 2 similarly to the valve block unit 300 according to Embodiment 1. The valve block 351 has the heat medium flow direction switching device 22, the heat medium flow direction switching device 23, and the heat medium flow control device 24, which cover one branch altogether. That is, the valve block unit 300a according to Embodiment 2 branches into four parts.

The cooling outward-flow main pipe 307 (illustrated as the cooling outward-flow main pipe 307a, the cooling outward-flow main pipe 307b, and the cooling outward-flow main pipe 307c from the right side in the figure), the heating outward-flow main pipe 308 (illustrated as the heating outward-flow main pipe 308a, the heating outward-flow main pipe 308b, and the heating outward-flow main pipe 308c from the right side in the figure), the cooling return-flow main pipe 305 (illustrated as the cooling return-flow main pipe 305a, the cooling return-flow main pipe 305b, and the cooling return-flow main pipe 305c from the right side in the figure), and the heating return-flow main pipe 306 (illustrated as the heating return-flow main pipe 306a, the heating retum-flow main pipe 306b, and the heating return-flow main pipe 306c from the right side in the figure) of each valve block 351 are connected, respectively, and form the main pipe (pipeline 5). It is needless to say that the valve block 351d on the left side in the figure also has each main pipe.

One end of each main pipe (the cooling outward-flow main pipe 307, the heating outward-flow main pipe 308, the cooling return-flow main pipe 305, and the heating return-flow main pipe 306) is formed into a female shape and the other end is formed into a male shape capable of connecting to the female-shaped end so that the valve blocks 351 can be connected. And on the cooling outward-flow main pipe 307a and the heating outward-flow main pipe 308a of the valve block 351a located at one of the both ends of the valve block unit 300a, the caps 318 that cap them are disposed. On the other hand, on the cooling return-flow main pipe 305d and the heating return-flow main pipe 306d of the valve block 351d located at the other of the both ends of the valve block unit 300a, the caps 319 that cap them are disposed. The heating return-flow main pipe 306a is connected to the suction side of the heating-side pump (first heat medium delivery device 21a), and the cooling return main pump 305a is connected to the suction side of the cooling-side pump (second heat medium delivery device 21b), respectively.

By employing the above structure, as shown in Figs. 21 and 22, the plurality of valve blocks 351 can be connected easily, and the number of branches can be flexibly changed. Also, since the valve blocks 350 are constructed so as to be easily connected, workability (productivity) of the valve block 350 is also improved, and cost reduction can be realized. In Figs. 21 and 22, the cooling outward-flow main pipe 307 and the heating outward-flow main pipe 308 are described as an example, but the same applies to the cooling return-flow main pipe 305 and the heating return-flow main pipe 306.

The valve block unit 300a is capable of switching the heat medium channel and also forms each main pipe by connecting the plurality of valve blocks 351. According to this valve block unit 300a, as compared with the device in which the channel switching device and the pipeline are provided separately, the pipeline around the valve can be simplified. Therefore, the unit on which the valve block unit 300a is mounted (the relay unit 3 similar to Embodiment 1) can be made compact.

A hole 411 shown in Fig. 22 is a sacrificed hole required for forming a channel of the valve block 351 and is capped with a lid 410. If the hole 411 is not capped, the return pipeline of each valve block 351 is connected, and thus, the pipeline is capped with the lid 410. On the lid 410, two seal means 410a are disposed. Here, an example in which the seal means 410a is an O-ring is illustrated. It is also known from Fig. 21 that the seal means 410a is disposed on the lid 410 and shuts off the return pipeline for each valve block 351.

As described above, since the valve block unit 300a according to Embodiment 2 is constituted by connecting the plurality of valve blocks 351, drastic size reduction can be realized. That is, the size reduction of the relay unit 3 on which the valve block unit 300a is mounted can be realized. Also, since the valve block 351 can be easily connected, assembling performance is improved, and labor or time required for installation can be reduced. Moreover, since the valve block unit 300a suppresses thermal interference of the pipelines 5, performance deterioration can be reduced. Therefore, by using the valve block unit 300a, contribution can be made to energy saving.

If leakage of the valve block 351 is to be inspected, in a state of the valve block unit 300 in which the plurality of valve blocks 350 are connected as shown in Figs. 4 and 20, a pressure of approximately 3 kgf/cm² is applied by using nitrogen, helium or the like so as to check if there is any leakage from the seal means 316 and 410a and then, the valve block unit is shipped. It is needless to say that the main pipes 308 and 307, the branch pipes 301 and 302 in Fig. 20, and the main pipes 305 and 306 in Fig. 4 are capped so that they can be pressurized. By conducting a leakage test in the above valve block unit 300 state, inspection time can be reduced, and productivity can be improved. Also, by conducting an inspection in the number of branches actually used in the product, the quality can be made stable, production time can be reduced, and cost can be reduced. That is because if the leakage test is conducted for each valve block 350, for example, the leakage test is needed even after they are assembled into the valve block unit 300, which means that the leakage test is conducted twice, which is wasteful.

### Embodiment 5.

In the above-described embodiments, the example in which the valve block unit 300 is mounted on the relay unit 3 is described, but a device in which the valve block unit 300 is used is not limited to the relay unit 3. For example, the valve block unit 300 can be also used for the other three-way valves and flow controllers in the air conditioning apparatus. Also, the fluid to be passed through the valve block unit 300 is not limited to water and the like, and other fluids such as a refrigerant can be made to pass.

Here, if the valve block unit 300 is applied to a refrigerant used in an air conditioning apparatus in general, since it is difficult to apply a plastic material to the body of the valve block 350 from the viewpoint of a design pressure, brass, aluminum or the like is used. Also, if the type of the medium is changed, considering swelling or deterioration, the seal means 316 and the like need to be selected so as to be suitable for the fluid. It is needless to say that the body material of the valve block 350 needs to be selected considering corrosion or the like.

Also, in the above-described embodiments, the example in which the heat medium heated in the heat medium heat exchanger 15a is passed through the main pipes 306 and 308, while the heat medium cooled in the heat medium heat exchanger 15b is passed through the main pipes 305 and 307 is described, but that example is not limiting. There can be various forms such that the heat media at different temperatures according to cooling (heating) are made to pass through the both main pipes and the like. Also, as for the above-described valve block unit 300, not only in the air conditioning apparatus, but usual water (cold water) is made to pass through the cooling outward-flow main pipe 307 and hot water from a boiler is made to pass through the heating outward-flow main pipe 308, for example, the position of the valve body 304a of the heat medium flow direction switching device 22 is adjusted, and hot water and cold water are mixed. As a result, the temperature of the hot water coming out of the branch pipe 301 can be freely controlled and can be also used for creating hot water for bath or shower.

### Reference Signs List

1 outdoor unit, 2 indoor unit, 2a indoor unit, 2b indoor unit, 2c indoor unit, 2d indoor unit, 3 relay unit, 4 refrigerant pipeline, 4a connection pipeline, 4b, connection pipeline, 5 pipeline, 5a, pipeline, 5b pipeline, 10 compressor, 11 four-way valve, 12 heat-source-side heat exchanger, 13a check valve, 13b check valve, 13c check valve, 13d check valve, 14 gas-liquid separator, 15 heat medium heat exchanger, 15a first heat medium heat exchanger, 15b second heat medium heat exchanger, 16 expansion device, 16a expansion device, 16b expansion device, 16c expansion device, 16d expansion device, 16e expansion device, 17 accumulator, 21 heat medium delivery device, 21a first heat medium delivery device, 21b second heat medium delivery device, 22 heat medium flow direction switching device, 22a heat medium flow direction switching device, 22b heat medium flow direction switching device, 22c heat medium flow direction switching device, 22d heat medium flow direction switching device, 23 heat medium flow direction switching device, 23a heat medium flow direction switching device, 23b heat medium flow direction switching device, 23c heat medium flow direction switching device, 23d heat medium flow direction switching device, 24 heat medium flow control device, 24a heat medium flow control device, 24b heat medium flow control device, 24c heat medium flow control device, 24d heat medium flow control device, 25 heat medium flow direction switching device, 26 use-side heat exchanger, 26a use-side heat exchanger, 26b use-side heat exchanger, 26c use-side heat exchanger, 26d use-side heat exchanger, 31 first heat medium temperature detecting means, 31a first heat medium temperature detecting means, 31b first heat medium temperature detecting means, 32 second heat medium temperature detecting means, 32a second heat medium temperature detecting means, 32b second heat medium temperature detecting means, 33 third heat medium temperature detecting means, 33a third heat medium temperature detecting means, 33b third heat medium temperature detecting means, 33c third heat medium temperature detecting means, 33d third heat medium temperature detecting means, 34 fourth heat medium temperature detecting means, 34a fourth heat medium temperature detecting means, 34b fourth heat medium temperature detecting means, 34c fourth heat medium temperature detecting means, 34d fourth heat medium temperature detecting means, 35 first refrigerant temperature detecting means, 36 refrigerant pressure detecting means, 37 second refrigerant temperature detecting means, 38 third refrigerant temperature detecting means, 100 air conditioning apparatus, 300 valve block unit, 300a valve block unit, 301 first branch pipe, 302 second branch pipe, 303 valve body, 303a opening portion, 303b channel, 304 valve body, 304a valve body, 304aa opening portion, 304ab channel, 304b valve body, 305 cooling return-flow main pipe, 305a cooling return-flow main pipe, 305b cooling return-flow main pipe, 305c cooling return-flow main pipe, 305d cooling return-flow main pipe, 306 heating return-flow main pipe, 306a heating return-flow main pipe, 306b heating return-flow main pipe, 306c heating return-flow main pipe, 306d heating return-flow main pipe, 307 cooling outward-flow main pipe, 307a cooling outward-flow main pipe, 307b cooling outward-flow main pipe, 307c cooling outward-flow main pipe, 307d cooling outward-flow main pipe, 308 heating outward-flow main pipe, 308a heating outward-flow main pipe, 308b heating outward-flow main pipe, 308c heating outward-flow main pipe, 308d heating outward-flow main pipe, 309 valve body rotating means, 310 valve body rotating means, 311 valve body rotating means, 312 valve rod, 314 valve rod 316 seal means, 318 cap, 319 cap, 320 joint, 321 sacrificed hole, 350 valve block, 350a valve block, 350b valve block, 350c valve block, 350d valve block, 351 valve block, 351a valve block, 351b valve block, 351c valve block, 351d valve block, 355 slit, 405 valve body rotating means, 407 valve body, 407a opening portion, 407b opening portion, 407c opening portion, 409 valve rod, 410 lid, 410a seal means, 411 hole, 500 connecting plate, 600 housing, 600a, 600b, 600c sheet metal.

## Claims

1. An air conditioning apparatus (100) comprising:
a relay unit (3) connected to one or a plurality of outdoor units (1) and a plurality of indoor units (2) by different pipeline systems, respectively, so as to exchange heat between a refrigerant circulating through the outdoor unit (1) and a heat medium different from the refrigerant and to circulate the heat medium through the indoor units (2),
one or a plurality of outdoor units (1) connected to the relay unit (3) by a pipeline and in which a refrigerant is circulated; and
a plurality of indoor units (2) connected to the relay unit (3) by a different system and in which the heat medium is circulated,
the relay unit (3) comprising:
a plurality of valve blocks (350), each integrating at least a plurality of branch pipes (301, 302) connected to the indoor units (2), a plurality of main pipes (305, 306, 307, 308) which become channels for the heat medium relating to the heat exchange, and a heat medium flow direction switching device (22, 23) that switches the main pipes (305, 306, 307, 308) to communicate with the branch pipes (301, 302), **characterized in that** a valve block unit (300) connects the plurality of valve blocks (350) and
a slit (355) is formed in the valve block (300) between a main pipe (307) on the cooling side and a main pipe (308) on the heating side.

2. The air conditioning apparatus (100) of claim 1, wherein
a heat medium flow control device (24) that adjusts a flow rate of the heat medium flowing through the branch pipes (301, 302) is further integrated into each of the valve blocks (350).

3. The air conditioning apparatus (100) of claim 1 or 2, further comprising:
a plurality of heat medium heat exchangers (15) that exchange heat between the refrigerant and the heat medium independently; and
a plurality of heat medium delivery devices (21) that pressurize the heat medium relating to the heat exchange in each of the heat medium heat exchangers (15), respectively.

4. The air conditioning apparatus (100) of any one of claims 1 to 3, wherein
the plurality of valve blocks (350) are connected and fixed by a connecting plate (500).

5. The air conditioning apparatus (100) of claim 3 or 4, wherein
the heat medium delivery devices (21) and heat medium flow direction switching devices (22, 23) of the valve blocks (350) are installed so as to be detachable from the same side.

6. The air conditioning apparatus (100) of any one of claims 3 to 5, wherein
two pipes constituting each of the branch pipes (301, 302) and at least one of the heat medium heat exchanger (15) that is planar are alternately arranged.

7. The air conditioning apparatus (100) of any one of claims 3 to 6, wherein
a housing (600) that at least accommodates the plurality of heat medium heat exchangers (15), the valve block unit (300), and the plurality of heat medium delivery devices (21) has a structure that is slidably opened/closed.

8. The air conditioning apparatus (100) of any one of claims 3 to 7, wherein
among the plurality of heat medium heat exchangers (15), a certain number of the heat medium heat exchangers (15) are used for heating the heat medium, while the remaining heat medium heat exchangers (15) are for cooling the heat medium.

## Patentansprüche

1. Klimatisierungsvorrichtung (100), umfassend:
eine Relais-Einheit (3), die mit einer oder mehreren Außeneinheiten (1) und mehreren Inneneinheiten (2) jeweils durch unterschiedliche Leitungssysteme so verbunden ist, dass Wärme zwischen einem Kühlmittel, das durch die Außeneinheit (1) zirkuliert, und einem Wärmemedium, das sich von dem Kühlmittel unterscheidet, getauscht wird, und dass das Wärmemedium durch die Inneneinheiten (2) zirkuliert,
eine oder mehrere Außeneinheiten (1), die mit der Relais-Einheit (3) durch eine Leitung verbunden sind und in denen ein Kühlmittel zirkuliert; und
mehrere Inneneinheiten (2), die mit der Relais-Einheit (3) durch ein anderes System verbunden sind und in denen das Wärmemedium zirkuliert,
wobei die Relais-Einheit (3) umfasst:
mehrere Ventilblöcke (350), wovon jeder wenigstens mehrere Verzweigungsleitungen (301, 302), die mit den Inneneinheiten (2) verbunden sind, mehrere Hauptleitungen (305, 306, 307, 308), die Kanäle für das mit dem Wärmeaustausch in Beziehung stehende Wärmemedium werden, und eine Vorrichtung (22, 23) zum Umschalten der Wärmemedium-Strömungsrichtung, die die Hauptleitungen (305, 306, 307, 308) so umschaltet, dass sie mit den Verzweigungsleitungen (301, 302) in Kommunikation sind, enthält,
**dadurch gekennzeichnet, dass** eine Ventilblockeinheit (300) die mehreren Ventilblöcke (350) verbindet und ein Spalt (355) in dem Ventilblock (300) zwischen einer Hauptleitung (307) auf der Kühlseite und einer Hauptleitung (308) auf der Heizseite ausgebildet ist.

2. Klimatisierungsvorrichtung (100) nach Anspruch 1, wobei
eine Vorrichtung (24) zum Steuern der Wärmemedium-Strömung, die eine Durchflussmenge des Wärmemediums, das durch die Verzweigungsleitungen (301, 302) strömt, einstellt, ferner in jedem der Ventilblöcke (350) enthalten ist.

3. Klimatisierungsvorrichtung (100) nach Anspruch 1 oder 2, das ferner umfasst:
mehrere Wärmemedium-Wärmetauscher (15), die unabhängig Wärme zwischen dem Kühlmittel und dem Wärmemedium tauschen; und
mehrere Wärmemedium-Zufuhrvorrichtungen (21), die das mit dem Wärmeaustausch in Beziehung stehende Wärmemedium jeweils in jedem der Wärmemedium-Wärmetauscher (15) mit Druck beaufschlagen.

4. Klimatisierungsvorrichtung (100) nach einem der Ansprüche 1 bis 3, wobei
die mehreren Ventilblöcke (350) durch eine Verbindungsplatte (500) verbunden und fixiert sind.

5. Klimatisierungsvorrichtung (100) nach Anspruch 3 oder 4, wobei
die Wärmemedium-Zufuhrvorrichtungen (21) und die Vorrichtungen (22, 23) zum Umschalten der Wärmemedium-Strömungsrichtung der Ventilblöcke (350) so eingebaut sind, dass sie von der gleichen Seite abgenommen werden können.

6. Klimatisierungsvorrichtung (100) nach einem der Ansprüche 3 bis 5, wobei
zwei Leitungen jeweils die Verzweigungsleitungen (301, 302) bilden und wenigstens einer der Wärmemedium-Wärmetauscher (15), der eben ist, abwechselnd angeordnet ist.

7. Klimatisierungsvorrichtung (100) nach einem der Ansprüche 3 bis 6, wobei
ein Gehäuse (600), das wenigstens die mehreren Wärmemedium-Wärmetauscher (15), die Ventilblockeinheit (300) und die mehreren Wärmemedium-Zufuhrvorrichtungen (21) aufnimmt, einen Aufbau aufweist, der gleitend geöffnet/geschlossen werden kann.

8. Klimatisierungsvorrichtung (100) nach einem der Ansprüche 3 bis 7, wobei
von den mehreren Wärmemedium-Wärmetauschern (15) eine bestimmte Anzahl der Wärmemedium-Wärmetauscher (15) zum Heizen des Wärmemediums verwendet wird, während die verbleibenden Wärmemedium-Wärmetauscher (15) zum Kühlen des Wärmemediums vorgesehen sind.

## Revendications

1. Appareil de climatisation (100) comprenant :
une unité de relais (3) connectée à une unité extérieure ou à une pluralité d'unités extérieures (1), et à une pluralité d'unités intérieures (2) par différents systèmes de canalisation, respectivement, afin d'échanger la chaleur entre un fluide frigorigène qui circule à travers extérieure (1), et un milieu thermique différent du fluide frigorigène, et de faire circuler le milieu thermique à travers les unités intérieures (2),
une unité extérieure ou une pluralité d'unités extérieures (1) connectées à l'unité de relais (3) par une canalisation et où circule un fluide frigorigène ; et
une pluralité d'unités intérieures (2) connectées à l'unité de relais (3) par un système différent, et où circule le milieu thermique,
l'unité de relais (3) comprenant :
une pluralité de blocs soupapes (350), chacun d'eux intégrant au moins une pluralité de canalisations de branchement (301, 302) connectées aux unités intérieures (2), une pluralité de canalisations principales (305, 306, 307, 308) qui deviennent des canaux du milieu thermique en ce qui concerne l'échange de chaleur, et un dispositif de commutation de la direction du flux du milieu thermique (22, 23) qui commute les canalisations principales (305, 306, 307, 308) afin de communiquer avec les canalisations de branchement (301, 302), **caractérisé en ce qu'**une unité blocs soupapes (300) connecte la pluralité de blocs soupapes (350), et
une fente (355) est formée dans le bloc soupape (300) entre une canalisation principale (307) du côté refroidissement, et une canalisation principale (308) du côté chauffage.

2. Appareil de climatisation (100) selon la revendication 1, où
un dispositif de commande du flux du milieu thermique (24), qui règle le débit du milieu thermique qui s'écoule à travers les canalisations de branchement (301, 302), est intégré en outre dans chacun des blocs soupapes (350).

3. Appareil de climatisation (100) selon la revendication 1 ou 2, comprenant en outre :
une pluralité d'échangeurs de chaleur de milieu thermique (15) qui échangent la chaleur entre le fluide frigorigène et le milieu thermique, indépendamment ; et
une pluralité de dispositifs d'approvisionnement en milieu thermique (21) qui pressurisent le milieu thermique en ce qui concerne l'échange de chaleur dans chacun des échangeurs de chaleur de milieu thermique (15), respectivement.

4. Appareil de climatisation (100) selon l'une quelconque de revendications 1 à 3, où la pluralité de blocs soupapes (350) sont connectés et fixés par une plaque de connexion (500).

5. Appareil de climatisation (100) selon la revendication 3 ou 4, où
les dispositifs d'approvisionnement en milieu thermique (21) et les dispositifs de commutation de la direction du flux du milieu thermique (22, 23) des blocs soupapes (350), sont installés afin de pouvoir être détachés du même côté.

6. Appareil de climatisation (100) selon l'une quelconque des revendications 3 à 5, où
deux canalisations constituant chacune des canalisations de branchement (301, 302), et l'un au moins des échangeurs de chaleur de milieu thermique (15) qui est plan, sont agencés de manière alternée.

7. Appareil de climatisation (100) selon l'une quelconque des revendications 3 à 6, où
un logement (600) qui reçoit au moins la pluralité d'échangeurs de chaleur de milieu thermique (15), l'unité blocs soupapes (300), et la pluralité de dispositifs d'approvisionnement en milieu thermique (21), présente une structure qui est ouverte / fermée de manière coulissante.

8. Appareil de climatisation (100) selon l'une quelconque des revendications 3 à 7, où
parmi la pluralité d'échangeurs de chaleur de milieu thermique (15), un certain nombre d'échangeurs de chaleur de milieu thermique (15), sont utilisés pour chauffer le milieu thermique, tandis que les échangeurs de chaleur de milieu thermique (15) restants, sont utilisés pour refroidir le milieu thermique.
